(19) **Europäisches Patentamt**

**European Patent Office**

**Office européen des brevets**

(11) **EP 0 384 181 B1**

(12) **EUROPEAN PATENT SPECIFICATION**

(45) Date of publication and mention
of the grant of the patent:
**19.12.2001 Bulletin 2001/51**

(51) Int Cl.7: **F01D 5/06**, F01D 5/28,
C22C 38/44, C22C 38/22,
C22C 38/18

(21) Application number: **90102007.3**

(22) Date of filing: **01.02.1990**

(54) **Steam turbine**

Dampfturbine

Turbine à vapeur

(84) Designated Contracting States:
**CH DE FR GB LI**

(30) Priority: **03.02.1989 JP 2389089**
**22.05.1989 JP 12662289**

(43) Date of publication of application:
**29.08.1990 Bulletin 1990/35**

(60) Divisional application:
**96115660.1 / 0 761 836**
**98101285.9 / 0 849 434**

(73) Proprietor: **Hitachi, Ltd.**
**Chiyoda-ku, Tokyo 101 (JP)**

(72) Inventors:
 • **Siga, Masao**
  **Hitachi-shi (JP)**
 • **Fukui, Yutaka**
  **Hitachi-shi (JP)**
 • **Kuriyama, Mitsuo**
  **Naka-gun, Ibaraki-ken (JP)**
 • **Maeno, Yoshimi**
  **Hitachi-shi (JP)**
 • **Suwa, Masateru**
  **Naka-gun, Ibaraki-ken (JP)**
 • **Kaneko, Ryoichi**
  **Hitachi-shi (JP)**
 • **Onoda, Takeshi**
  **Hitachi-shi (JP)**
 • **Kajiwara, Hidefumi**
  **Katsuta-shi (JP)**
 • **Watanabe, Yasuo**
  **Katsuta-shi (JP)**
 • **Takahashi, Shintaro**
  **Hitachi-shi (JP)**
 • **Tan, Toshimi**
  **Katsuta-shi (JP)**

(74) Representative: **Beetz & Partner Patentanwälte**
**Steinsdorfstrasse 10**
**80538 München (DE)**

(56) References cited:
 **EP-A- 0 083 109** **EP-A- 0 225 425**
 **EP-A- 0 298 127** **JP-A- 60 224 766**

 • **BROWN BOVERI REVIEW, no. 5, 1980, pages
  277-291, Baden, CH; HAUSERMANN et al.:
  "Steam turbines of medium output in industry
  and power plants: experience in handling
  contracts and in operation"**
 • **IDEM**
 • **REVUE ALSTHOM, vol. 12, 1988, pages 3-17,
  Paris, FR; J. VIALLIS: "65 Mw fossil-fuel power
  plants"**
 • **PATENT ABSTRACTS OF JAPAN, vol. 003, no.
  068 (C-00048), 13th June 1979; & JP-A-54 040 225
  (KOBE STEEL LTD) 29-03-1979**
 • **PATENT ABSTRACTS OF JAPAN, vol. 10, no.
  00094 (C-00338)[002151], 11th April 1986; &
  JP-A-60 224 766 (TOSHIBA K.K.) 09-11-1985**
 • **C.W. WEGST: "Stahlschlüssel", no. 377/84,
  1983, Verlag Stahlschlüssel Wegst GmbH,
  Marchbach, DE**
 • **PATENT ABSTRACTS OF JAPAN, vol. 004, no.
  00085 (C-00015), 18th June 1980; & JP-A-55 050
  430 (HITACHI LTD) 12-04-1980**
 • **PATENT ABSTRACTS OF JAPAN, vol. 010, no.
  00339 (C-00385), 15th November 1985; & JP-A-61
  143 523 (TOSHIBA CORP.) 01-07-1986**

- **SIEMENS ZEITSCHRIFT, vol. 6, no. 47, 1976, pages 496-504, Erlangen, DE; "Untersuchungen zur Rotordynamik von Industrieturbinen"**

- **VDI NACHRICHTEN, vol. 30, no. 31, 6th August 1976, Dusseldorf, DE; "Lange Schaufeln für hochdrehende Dampfturbine"**

**Description**

The invention relates to a steam turbine provided with a rotor integrating high and low pressure portions fabricated from Ni-Cr-Mo-V low alloy steel having superior high temperature strength and toughness, to rotor shaft thereof, heat resisting steel, and a manufacturing method thereof. Such a steam turbine is disclosed in the JP-A-60-224 766.

In general, Cr-Mo-V steel specified in accordance with ASTM (Designation: A470-84, Class 8) is used as a material of a high pressure rotor exposed to high temperature steam (steam temperature: about 538°C) and 3.5 Ni-Cr-Mo-V steel specified in accordance with ASTM (Designation: A470-84, Class 7) is used as a material of a low pressure (steam temperature: about 100°C) rotor. The former Cr-Mo-V steel is superior in high temperature strength, but inferior in low temperature toughness. The latter 3.5 Ni-Cr-Mo-V steel is superior in low temperature toughness, but inferior in high temperature strength.

A turbine having a large capacity comprises a high pressure portion, an intermediate pressure portion, and a low pressure portion in accordance with the steam conditions thereof, and high and intermediate pressure rotors are fabricated from Cr-Mo-V steel and a low pressure rotor is fabricated from 3.5 Ni-Cr-Mo-V steel.

Turbines having a small capacity less than 100,000 and an intermediate capacity of 100,000 to 300,000 KW have a rotor small in size and thus if a material having both the advantages of the above materials used in the high and low pressure rotors is available, the high and the low pressure portions thereof can be integrated (fabricated from the same material). This integration makes the turbine compact as a whole and the cost thereof is greatly reduced. An example of a material of the rotor integrating high and low pressure portions is disclosed in the JP-B 58-11504, the JP-A 54-40225 and the JP-A 60-224766.

If the high and low pressure portions are integrated by using the currently available rotor materials, i.e., Cr-Mo-V steel or Ni-Cr-Mo-V steel, the former cannot provide safety against the brittle fracture of the low pressure portion, because it is inferior in low temperature toughness, while the latter cannot provide safety against the creep fracture of the high pressure portion because it is inferior in high temperature strength.

The JP-B 58-11504 discloses a rotor integrating high and low pressure portions fabricated from a material consisting, by weight, of 0.15 to 0.3% C, not more than 0.1% Si, not more than 1.0% Mn, 0.5 to 1.5% Cr, 0.5 to 1.5% Ni, not more than 1.5% but more than 0.5% Mo, 0.15 to 0.30% V, 0.01 to 0.1% Nb, and the balance Fe, but it does not exhibit sufficient toughness after heated at a high temperature for a long time and thus long blades having a length not less than 30 inches cannot be planted thereon.

The JP-A 60-224766 discloses a steam turbine rotor fabricated from a material consisting, by weight, of 0.10 to 0.35% C, not more than 0.10% Si, not more than 1.0% Mn, 1.5 to 2.5% Ni, 1.5 to 3.0% Cr, 0.3 to 1.5% Mo, 0.05 to 0.25% V, and the balance Fe, and further discloses that this material may contain 0.01 to 0.1% Nb, and 0.02 to 0.1% N. This rotor, however, is inferior in creep rupture strength.

The JP-A 62-189301 discloses a steam turbine integrating high and low pressure portions, which, however, uses a rotor shaft fabricated by mechanically combining a material superior in high temperature strength but inferior in toughness and a material superior in toughness but inferior in high temperature strength, and thus it is not fabricated from a material having the same component. This mechanical combination requires a large structure to obtain strength and thus the rotor shaft cannot be made small in size and, in addition, the reliability is impaired.

An object of the invention is to provide a small steam turbine having movable blades having a length not less than 30 inches (762 mm) at the final stage and a rotor shaft integrating high and low pressure portions, and capable of producing a large output by a single turbine.

Another object of the invention is to provide a rotor shaft having superior high temperature strength and less heating embrittlement, heat resisting steel, and a manufacturing method thereof.

The invention provides a steam turbine having the features of claim 1. In the Ni-Cr-Mo-V low alloy steel of the rotor shaft a ratio (Mn/Ni) is not more than 0.12 or a ratio (Si/+Mn)/Ni is not more than 0.18 by weight.

The above rotor shaft is fabricated from Ni-Cr-Mo-V low alloy steel having a bainite structure and containing, by weight, 0.15 to 0.4% C, not more than 0.1% Si, 0.05 to 0.25% Mn, 1.5 to 2.5% Ni, 0.8 to 2.5% Cr, 0.8 to 2.5% Mo, and 0.1 to 0.3% V, wherein a ratio (Mn/Ni) is not more than 0.12 or a ratio (Si+Mn)/Ni is not more than 0.18.

The rotor shaft is provided at the center thereof with FATT of a temperature not more than the steam outlet temperature and is made of Ni-Cr-Mo-V low alloy steel having a bainite structure and having 100,000 hour creep rapture strength not less than 11 kg/mm$^2$, and more preferably not less than 12 kg/mm$^2$ at a temperature not more than the above steam outlet temperature and at 538°C.

A steam turbine according to the invention has a steam inlet temperature not less than 530°C at the steam inlet of the first stage blades thereof and a steam outlet temperature not more than 100°C at the steam outlet of the final stage blades thereof, a ratio (L/D) of a length (L) between bearings of the rotor shaft to a diameter (D) measured between the extreme ends of the final blade portion is 1.4 to 2.3, and the blades at least at the final stage thereof have a length not less than 30 inches (762 mm).

The above rotor shaft is fabricated from Ni-Cr-Mo-V low alloy steel having a bainite structure, and this low alloy steel has high temperature strength withstanding the above steam temperature not less than 530°C and impact value withstanding impacts occurring when the above blades having a length at least 30 inches are planted.

The above blades on a low pressure side have a length not less than 30 inches, the blades on a high pressure side are fabricated from high-Cr martensitic steel having creep rupture strength superior to that of the material of the blades on the low pressure side, and the blades on the low pressure side are fabricated from high-Cr martensitic steel having toughness higher than that of the material of the blades on the high pressure side.

The above-mentioned blades having a length not less than 30 inches are fabricated from martensitic steel containing by weight 0.08 to 0.15% C, not more than 0.5% Si, not more than 1.5% Mn, 10 to 13% Cr, 1.0 to 2.5% Mo, 0.2 to 0.5% V and 0.02 to 0.1% N, while the above-mentioned blades on the high pressure side are fabricated from martensitic steel containing by weight 0.2 to 0.3% C, not more than 0.5% Si, not more than 1% Mn, 10 to 13% Cr, not more than 0.5% Ni, 0.5 to 1.5% Mo, 0.5 to 1.5% W and 0.15 to 0.35% V, and the above blades on the low pressure side having a length not more than 30 inches are fabricated from martensitic steel consisting, by weight, of 0.05 to 0.15% C, not more than 0.5% Si, not more than 1% and preferably 0.2 to 1.0% Mn, 10 to 13% Cr, not more than 0.5% Ni, not more than 0.5% Mo, and the balance Fe and incidental impurities.

The leading edge portion at the extreme end of the above blades having a length not less than 30 inches (762 mm) is preferably provided with an erosion-preventing layer The blade practically has a length of 33.5 inches (850.9 mm), 40 (1016 mm) inches, 46.5 (1181 mm) inches and so forth.

The present invention also provides a combined generator system by which a single generator is simultaneously driven by a steam turbine and a gas turbine, wherein the steam turbine is defined according to claim 1. The rotor is provided with multi-stage blades planted on the integrated rotor shaft thereof from a high pressure side to a low pressure side of steam and a casing covering the rotor, a temperature at the steam inlet of the steam turbine is not less than 530°C and a temperature at the steam outlet thereof is not more than 100°C, the casing is integrally arranged from the high pressure side of the blades to the low pressure side thereof, the steam inlet is disposed upstream of the first stage of the above blades and the steam outlet is disposed downstream of the final stage of the above blades to enable the above stem to flow in one direction, and the above blades on the low pressure side have a length not less than 30 inches.

The present invention can employ the above-mentioned rotor for a steam turbine having a rotor provided with multi-stage blades planted on the integrated rotor shaft thereof from a high pressure side to a low pressure side of steam and a casing covering the rotor, wherein the steam flows in different directions when comparing the case of the high pressure side with the low pressure side.

Stationary blades in the present invention are fabricated from an annealed wholly martensitic steel consisting, by weight, of 0.05 to 0.15% C, not more than 0.5% Si, 0.2 to 1% Mn, 10 to 13% Cr, not more than 0.5% Ni, not more than 0.5% Mo, and the balance Fe and incidental impurities.

A casing according to the present invention is fabricated from a Cr-Mo-V cast steel having a bainite structure and containing by weight 0.15 to 0.30% C, more than 0.5% Si, 0.05 to 1.0% Mn, 1 to 2% Cr, 0.5 to 1.5% Mo, 0.05 to 0.2% V and not more than 0.05% Ti.

The heat resisting Ni-Cr-Mo-V steel of the rotor shaft having a bainite structure can contain by weight 0.15 to 0.4% C, not more than 0.1% Si, 0.05 to 0.25% Mn, 1.5 to 2.5% Ni, 0.8 to 2.5% Cr, 0.8 to 2.5% Mo, and 0.10 to 0.35% V, wherein a ratio Mn/Ni is not more than 0.12 or a ratio (Si + Mn)/Ni is not more than 0.18.

Said heat resisting Ni-Cr-Mo-V steel can contain 0.10 to 0.30% V, and 0.001 to 0.1% in total at least one selected from the group consisting of Al, Zr, Ca, and rare earth elements, wherein a ratio Mn/Ni is not more than 0.12 or a ratio (Si + Mn)/Ni is not more than 0.18.

The heat resisting Ni-Cr-Mo-V steel of the rotor shaft mainly having a bainite structure can contain by weight 0.15 to 0.4% C, not more than 0.1% Si, 0.05 to 0.25% Mn, 1.5 to 2.5% Ni, 0.8 to 2.5% Cr, 0.8 to 2.5% Mo, 0.10 to 0.30% V, and 0.005 to 0.15% at least one selected from the group consisting of Nb and Ta, wherein a ratio (Mn/Ni) is not more than 0.12 or a ratio (Si + Mn)/Ni is not more than 0.18.

The heat resisting Ni-Cr-Mo-V steel of the rotor shaft having a bainite structure can contain by weight 0.15 to 0.4% C, not more than 0.1% Si, 0.05 to 0.25% Mn, 1.5 to 2.5% Ni, 0.8 to 2.5% Cr, 0.8 to 2.5% Mo, 0.10 to 0.30% V, 0.001 to 0.1% in total at least one selected from the group consisting of Al, Zr, Ca, and rare earth elements, and 0.005 to 0.15% at least one selected from the group consisting of Nb and Ta, wherein a ratio (Mn/Ni) is not more than 0.12 or a ratio (Si + Mn)/Ni is not more than 0.18.

A Ni-Cr-Mo-V low alloy steel consisting, by weight, of 0.15 to 0.4% C, not more than 0.1% Si, 0.05 to 0.5% Mn, 1.6 to 2.5% Ni, 0.8 to 2.5% Cr, 0.8 to 2.5% Mo, 0.1 to 0.5% V, at least one selected from the group consisting of 0.005 to 0.15% Nb, 0.005 to 0.15% Ta, 0.001 to 0.1% Al, 0.001 to 0.1% Zr, 0.001 to 0.1% Ca, 0.001 to 0.1% rare earth elements, 0.1 to 1.0% W, 0.001 to 0.1% Ti, 0.001 to 0.1% B, and the substantial balance Fe and incidental impurities, wherein a ratio (V + Mo)/(Ni + Cr) is 0.45 to 0.7 can be used as material of a rotor shaft integrating high and low pressure portions.

These rotor shafts are applied to a steam turbine according to the present invention.

Further, an amount of oxygen contained in the above Cr-Mo-V low alloy steels is preferably not more than 25 ppm.

A method of manufacturing the Cr-Mo-V steel having the composition described above comprises the steps of forming a steel ingot thereof particularly by melting the ingot by electroremelting or in an arc furnace under an atmospheric air and then by deoxidizing the same through carbon under vacuum, hot forging the steel ingot, quenching the steel ingot in such a manner that it is heated to an austenizing temperature and then cooled at a predetermined cooling speed, and annealing the steel ingot, the Cr-Mo-V steel mainly having a bainite structure.

Preferably, the quenching temperature is 900 to 1000°C and an annealing temperature is 630 to 700°C.

A steam turbine according to the present invention is most suitably applied to a thermal power plant having an intermediate capacity of 100,000 to 300,000 KW from a view point that it is compact in size and has an improved thermal efficiency. In particular, the steam turbine is provided with the longest blades having a length of 33.5 (850.9 mm) inches and at least ninety pieces of the blades can be planted around the overall circumference thereof.

[Operation]

The component of the low alloy steel constituting the steam turbine rotor of the present invention and the reason why heat treatment conditions are limited are explained below.

Carbon is an element necessary to improve quenching ability and to obtain strength. When an amount thereof is not more than 0.15%, sufficient quenching ability cannot be obtained and a soft ferritic structure occurs about the center of the rotor, so that sufficient tensile strength and yield strength can not be obtained. When a content thereof is not less than 0.4%, it reduces toughness. Thus, the carbon is limited to a range from 0.15 to 4.0%, and, in particular, preferably limited to a range from 0.20 to 0.28%.

Although silicon and manganese are conventionally added as a deoxidizer, a rotor superior in quality can be produced without the addition thereof when a steel making technology such as a vacuum carbon deoxidation method or an electro-slug melting method is used. A content of Si and Mn must be made as low as possible from a view point that the rotor is made brittle when it is operated for a long time, and thus the amounts thereof are limited to not more than 0.1% and 0.5%, respectively, and in particular, $Si \leqq 0.05\%$ and $Mn \leqq 0.25\%$ are preferable and $Mn \leqq 0.15\%$ is more preferable. Mn not less than 0.05% acts as a desulfurizing agent and is necessary to enhance hot workability. Thus, the lower limit of Mn is 0.05%.

Nickel is indispensable to improve quenching ability and toughness. A content thereof less than 1.5% is not sufficient to obtain an effect for improving toughness. An addition of a large amount thereof exceeding 2.5% lowers creep rupture strength. In particular, preferably an amount thereof is in a range from 1.6 to 2.0%.

Chromium improves quenching ability, toughness, and strength, and also improves corrosion resistance in steam. A content thereof less than 0.8% is not sufficient to exhibit an effect for improving them, and an addition thereof exceeding 2.5% lowers creep rupture strength. In particular, preferably an content thereof is in a range from 1.2 to 1.9%.

Molybdenum precipitates fine carbide in crystal grains while an annealing processing is carried out, with a result that it has an effect for improving high temperature strength and preventing embrittlement caused by annealing. A content thereof less than 0.8% is not sufficient to exhibit this effect, and an addition of a large amount thereof exceeding 2.5% reduces toughness. In particular, preferably a content thereof is in a range from 1.2 to 1.5% from a view point of toughness and preferably a content thereof is in a range exceeding 1.5% but not more than 2.0% from a view point of strength.

Vanadium precipitates fine carbide in crystal grains while an annealing processing is carried out with a result that it has an effect for improving high temperature strength and toughness. A content thereof less than 0.1% is not sufficient to exhibit this effect, but an addition thereof exceeding 0.3% saturates the effect. In particular, preferably the content thereof is in a range from 0.20% to 0.25%.

It has been experimentally clarified that the above-mentioned nickel, chromium, vanadium, and molybdenum are greatly concerned with toughness and high temperature strength and act in combination in the invented steel. More specifically, to obtain a material superior in both high temperature strength and low temperature toughness, a ratio of a sum of vanadium and molybdenum, which are carbide creating elements and which have an effect for improving high temperature strength, to a sum of nickel and chromium, which have an effect for improving quenching ability and toughness, preferably satisfies the equation $(V + Mo)/(Ni + Cr) = 0.45$ to $0.7$.

When low alloy steel composed of the above component is manufactured, an addition of any of rare earth elements, calcium, zirconium, and aluminum improves the toughness thereof. An addition of rare earth elements less than 0.005% is not sufficient to exhibit an effect for improving the toughness, but an addition thereof exceeding 0.4% saturates the effect. Although an addition of a small amount of Ca improves the toughness, an amount thereof less than 0.0005% does not exhibit an effect for improvement, but an addition thereof exceeding 0.01% saturates the effect. An addition of Zr less than 0.01% is not sufficient to exhibit an effect for improving the toughness, but an addition thereof exceeding 0.2% saturates the effect. An addition of Al less than 0.001% is not sufficient to exhibit an effect for improving the toughness, but an addition thereof exceeding 0.02% lowers creep rupture strength.

Further, oxygen is concerned with high temperature strength, and superior creep rapture strength can be obtained by controlling an amount of $O_2$ in a range from 5 to 25 ppm in the invented steel.

At least one of niobium and tantalum is added in an amount of 0.005 to 0.15%. A content thereof less than 0.005% is not sufficient to exhibit an effect for improving strength, whereas when a content thereof exceeds 0.15% the huge carbides thereof are crystallized in such a large structure as a steam turbine rotor, whereby strength and toughness are lowered, and thus this content is in a range from 0.005 to 0.15%. In particular, preferably the content is in a range from 0.01 to 0.05%.

Tungsten is added in an amount not less than 0.1% to increase strength. This amount must be in a range from 0.1 to 1.0%, because when the amount exceeds 1.0%, a problem of segregation arises in a large steel ingot by which strength is lowered, and preferably the amount is in a range from 0.1 to 0.5%.

A ratio Mn/Ni or a ratio (Si + Mn)/Ni must be not more than 0.12 and not more than 0.18, respectively, whereby Ni-Cr-Mo-V low alloy steel having a bainitic structure is greatly prevented from being subjected to heating embrittlement, with the result that the low alloy steel is applicable to a rotor shaft integrating low and high pressure portions.

The steel having the characteristics superior in both creep rupture strength and high impact value can be obtained by setting a ratio (V + Mo)/(Ni + Cr) to 0.45 to 0.7, whereby blades each having a length not less than 30 inches can be planted on the rotor shaft integrating high and low pressure portions according to the present invention.

The application of the above new material to a rotor shaft enables long blades having a length of not less than 30 inches to be planted on the rotor shaft as final stage blades, and the rotor shaft can be made compact such that a ratio (L/D) of a length (L) thereof between bearings to a blade diameter (D), is made to 1.4 to 2.3, and preferably the ratio is made to 1.6 to 2.0. Further, a ratio of the maximum diameter (d) of the rotor shaft to a length ($\ell$) of final long blades can be made to 1.5 to 2.0. With this arrangement, an amount of steam can be increased to the maximum thereof in accordance with the characteristics of the rotor shaft, whereby a large amount of power can be generated by a small steam turbine. In particular, preferably this ratio is 1.6 to 1.8. A ratio not less than 1.5 is determined from the number of blades, and the greater the ratio, the better the result can be obtained, but preferably the ratio is not more than 2.0 from a view point of strength with respect to a centrifugal force.

A steam turbine using the rotor shaft integrating high and low pressure portions according to the present invention is small in size, and capable of generating power of 100,000 to 300,000 KW and making a distance thereof between bearings very short, i.e., not more than 0.8 m per 10, 000 KW of generated power. Preferably, the distance is 0.25 to 0.6 m per 10,000 KW.

The application of the above Cr-Mo-V low alloy steel to a rotor shaft integrating high and low pressure portions enables movable blades having a length of not less than 30 (762 mm) inches and in particular not less than 33.5 (850.9 mm) inches to be planted at a final stage, whereby an output from a single turbine can be increased and the turbine can be made small in size.

According to the present invention, since a steam turbine integrating high and low pressure portions provided with long blades not less than 30 inches can be manufactured, an output from a single turbine, which is small in size, can be greatly increased. Further, there is an effect in that a power generating cost and a cost for constructing a power plant are reduced. Furthermore, according to the present invention, a rotor shaft having superior high temperature strength and less heat embrittlement and superior heat resisting steel can be obtained, and in particular a rotor shaft integrating high and low pressure portions on which blades having a length not less than 30 inches are planted can be obtained.

BRIEF DESCRIPTION OF THE INVENTION

Figures 1, 8, and 9 are partial cross sectional views of a steam turbine using a rotor shaft integrating high and low pressure portions according to the present invention;

Figure 2 is a graph showing a relationship between a ratio (V + Mo)/(Ni + Cr), and creep rapture strength and impact value;

Figure 3 is a graph showing a relationship between creep rapture strength and oxygen;

Figure 4 is a graph showing a relationship between creep rapture strength and Ni; and

Figure 5 to Figure 7 are graphs showing relationships between a V-shaped notch impact value, and Ni, Mn, Si + Mn, a ratio Mn/Ni, and a ratio (Si + Mn)/Ni.

PREFERRED EMBODIMENTS OF THE INVENTION

**EXAMPLE 1**

A turbine rotor according to the present invention is described below with reference to examples. Table 1 shows chemical compositions of typical specimens subjected to toughness and creep rapture tests. The specimens were obtained in such a manner that they were melted in a high frequency melting furnace, made to an ingot, and hot forged to a size of 30 mm square at a temperature from 850 to 1150°C. The specimens Nos. 1, 3 and 7 to 11 are materials according to the present invention. The specimens Nos. 2, 4 to 6 were prepared for the comparison with the invented materials. The specimen No. 5 is a material corresponding to ASTM A470 Class 8 and the specimen No. 6 is a material corresponding to ASTM A470 Class 7. These specimens were quenched in such a manner that they were made to have austenitic structure by being heated to 950°C in accordance with a simulation of the conditions of the center of a rotor shaft integrating high and low pressure portions of a steam turbine, and then cooled at a speed of 100°C/h. Next, they were annealed by being heated at 665°C for 40 hours and cooled in a furnace. Cr-Mo-V steels according to the present invention included no ferrite phase and were made to have a bainite structure as a whole.

An austenitizing temperature of the invented steels must be 900 to 1000°C. When the temperature is less than 900°C, creep rapture strength is lowered, although superior toughness can be obtained. When the temperature exceeds 1000°C, toughness is lowered, although superior creep rapture strength can be obtained. An annealing temperature must be 630 to 700°C. If the temperature is less than 630°C, superior toughness cannot be obtained, and when it exceeds 700°C, superior creep strength cannot be obtained.

Table 2 shows the results of a tensile strength test, impact test, and creep rupture test. Toughness is shown by Charpy impact absorbing energy of a V-shaped notch tested at 20°C. Creep rupture strength is determined by Larason Mirror method and shown by a strength obtained when a specimen was heated at 538°C for 100,000 hours. As apparent from Table 2, the invented materials have a tensile strength not less than 88 kgf/mm$^2$ at a room temperature, a 0.2% yield strength not less than 70 kgf/mm$^2$, an FATT not more than 40°C, an impact absorbing energy not less than 2.5 kgf-m both before they were heated and after they had been heated, and a creep rupture strength not less than about 11 kg/mm$^2$, and thus they are very useful for a turbine rotor integrating high and low pressure portions. In particular, a material having a strength not less than 15 kg/mm$^2$ is preferable to plant long blades of 33.5 (850.9 mm) inches.

Table 1

| Specimen No. | Composition (wt%) | | | | | | | | | | V+Mo/Ni+Cr | Mn/Ni | Si+Mn/Ni |
|---|---|---|---|---|---|---|---|---|---|---|---|---|---|
| | C | Si | Mn | P | S | Ni | Cr | Mo | V | | | | |
| 1 | 0.29 | 0.08 | 0.18 | 0.012 | 0.012 | 1.85 | 1.20 | 1.21 | 0.22 | – | 0.47 | 0.097 | 0.141 |
| 2 | 0.24 | 0.06 | 0.07 | 0.007 | 0.010 | 1.73 | 1.38 | 1.38 | 0.27 | – | 0.53 | 0.040 | 0.075 |
| 3 | 0.27 | 0.04 | 0.15 | 0.007 | 0.009 | 1.52 | 1.09 | 1.51 | 0.26 | – | 0.68 | 0.099 | 0.125 |
| 4 | 0.30 | 0.06 | 0.19 | 0.008 | 0.011 | 0.56 | 1.04 | 1.31 | 0.26 | – | 0.98 | 0.339 | 0.446 |
| 5 | 0.33 | 0.27 | 0.77 | 0.007 | 0.010 | 0.34 | 1.06 | 1.28 | 0.27 | – | 1.11 | 2.265 | 3.059 |
| 6 | 0.23 | 0.05 | 0.30 | 0.009 | 0.012 | 3.56 | 1.66 | 0.40 | 0.12 | – | 0.10 | 0.084 | 0.098 |
| 7 | 0.31 | 0.07 | 0.15 | 0.007 | 0.009 | 2.00 | 1.15 | 1.32 | 0.22 | – | 0.49 | 0.075 | 0.110 |
| 8 | 0.26 | 0.06 | 0.17 | 0.007 | 0.008 | 1.86 | 1.09 | 1.41 | 0.24 | La+Ce 0.20 | 0.56 | 0.091 | 0.124 |
| 9 | 0.25 | 0.07 | 0.17 | 0.010 | 0.010 | 1.72 | 1.40 | 1.42 | 0.24 | Ca 0.005 | 0.53 | 0.099 | 0.140 |
| 10 | 0.24 | 0.05 | 0.13 | 0.009 | 0.007 | 1.73 | 1.25 | 1.39 | 0.25 | Zr 0.04 | 0.55 | 0.075 | 0.104 |
| 11 | 0.26 | 0.03 | 0.09 | 0.008 | 0.009 | 1.71 | 1.23 | 1.45 | 0.23 | Al 0.01 | 0.57 | 0.052 | 0.070 |
| 12 | 0.29 | 0.09 | 0.23 | 0.013 | 0.009 | 1.70 | 1.06 | 1.32 | 0.25 | – | 0.57 | 0.135 | 0.188 |
| 13 | 0.29 | 0.21 | 0.33 | 0.012 | 0.007 | 1.74 | 1.04 | 1.20 | 0.23 | – | 0.51 | 0.190 | 0.310 |
| 14 | 0.31 | 0.25 | 0.90 | 0.010 | 0.007 | 1.86 | 1.06 | 1.29 | 0.22 | – | 0.52 | 0.484 | 0.618 |

EP 0 384 181 B1

## Table 2

Value in parenthesis: after heated at 500°C for 3000 h

| Specimen No. | Tensile strength (kg/mm²) | 0.02% yield strength (kg/mm²) | Elonga-tion (%) | Contrac-tion of area (%) | Impact absorbing energy (kg-m) | 50% FATT (°C) | 538°C Creep rapture strength (kgf/mm2) |
|---|---|---|---|---|---|---|---|
| 1 | 92.4 | 72.5 | 21.7 | 63.7 | 3.5 (3.3) | 30 | 12.5 |
| 2 | 92.5 | 72.6 | 21.3 | 62.8 | 3.3 (3.0) | 39 | 15.6 |
| 3 | 90.8 | 71.4 | 22.5 | 64.0 | 2.8 (2.7) | 38 | 18.4 |
| 4 | 90.8 | 71.9 | 20.4 | 61.5 | 1.2 | 119 | 15.5 |
| 5 | 88.1 | 69.2 | 20.1 | 60.8 | 1.3 | 120 | 14.6 |
| 6 | 72.4 | 60.1 | 25.2 | 75.2 | 12.0 | −20 | 5.8 |
| 7 | 89.9 | 70.3 | 22.3 | 64.5 | 3.6 (3.3) | 29 | 10.8 |
| 8 | 90.8 | 70.7 | 21.9 | 63.9 | 4.2 | 21 | 14.8 |
| 9 | 91.0 | 71.4 | 21.7 | 63.5 | 3.9 | 25 | 15.1 |
| 10 | 92.0 | 72.2 | 20.9 | 62.2 | 3.7 | 34 | 15.6 |
| 11 | 90.6 | 71.1 | 21.5 | 61.8 | 3.7 | 36 | 15.5 |
| 12 | − | − | − | − | 3.0 (2.4) | − | − |
| 13 | − | − | − | − | 3.4 (2.4) | − | − |
| 14 | − | − | − | − | 3.6 (2.3) | − | − |

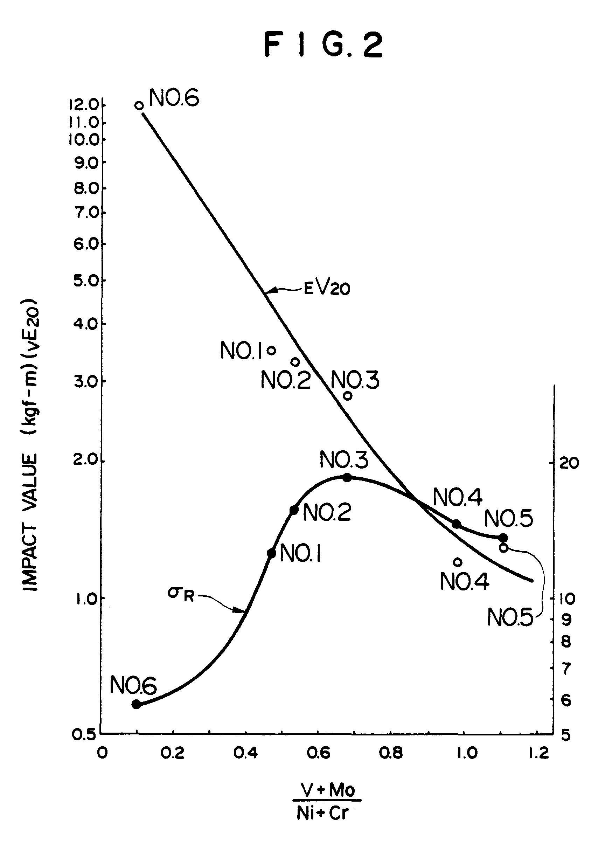

Fig. 2 shows a relationship between a ratio of a sum of V and Mo acting as carbide creating elements to a sum of Ni and Cr acting as quenching ability improving elements, and creep rupture strength and impact absorbing energy. The creep rupture strength is increased as the component ratio (V + Mo)/(Ni + Cr) is increased until it becomes about 0.7. It is found that the impact absorbing energy is lowered as the component ratio is increased. It is found that the toughness (vE20 $\geqq$ 2.5 kgf/m) and the creep rupture strength (6R $\geqq$ 11 kgf/mm$^2$) necessary as the characteristics of a material forming the turbine rotor integrating high and low pressure portions are obtained when (V + Mo)/(Ni + Cr) = 0.45 to 0.7. Further, to examine the brittle characteristics of the invented material No. 2 and the comparative material Nos. 5 (corresponding to a material currently used to a high pressure rotor) and 6 (corresponding to a material currently used to a low pressure rotor), an impact test was effected to specimens before subjected to a brittle treatment for 3000 h at 500°C and those after subjected to the treatment and a 50% fracture appearance transition temperature (FATT) was examined. An FATT of the comparative material No. 5 was increased (made brittle) from 119°C to 135°C (ΔFATT = 16°C), an FATT of the material No. 6 was increased from -20°C to 18°C (ΔFATT = 38°C) by the brittle treatment, whereas it was also confirmed that an FATT of the invented material No. 3 remained at 38°C before and after the brittle treatment and thus it was confirmed that this material was not made brittle.

The specimens Nos. 8 to 11 of the invented materials added with rare earth elements (La - Ce), Ca, Zr, and Al, respectively, have toughness improved by these rare earth elements. In particular, the addition of the rare earth elements is effective to improve the toughness. A material added with Y in addition to La - Ce was also examined and it was confirmed that Y was very effective to improve the toughness.

Table 3 shows the chemical compositions and creep rapture strength of the specimens prepared to examine an influence of oxygen to creep rapture strength of the invented materials. A method of melting and forging these specimens were the same as that of the above-mentioned specimens Nos. 1 to 11.

Table 3

| Specimen No. | Composition (wt%) | | | | | | | | | |
|---|---|---|---|---|---|---|---|---|---|---|
| | C | Si | Mn | P | S | Ni | Cr | Mo | V | O |
| 15 | 0.26 | 0.05 | 0.08 | 0.008 | 0.011 | 1.71 | 1.24 | 1.37 | 0.25 | 0.0004 |
| 16 | 0.23 | 0.04 | 0.10 | 0.009 | 0.011 | 1.60 | 1.24 | 1.37 | 0.25 | 0.0014 |
| 17 | 0.25 | 0.05 | 0.09 | 0.010 | 0.012 | 1.61 | 1.25 | 1.36 | 0.24 | 0.0019 |
| 18 | 0.24 | 0.05 | 0.12 | 0.008 | 0.010 | 1.65 | 1.20 | 1.38 | 0.24 | 0.0030 |
| 19 | 0.25 | 0.04 | 0.11 | 0.009 | 0.010 | 1.69 | 1.29 | 1.29 | 0.23 | 0.0071 |
| 20 | 0.23 | 0.06 | 0.09 | 0.010 | 0.012 | 1.72 | 1.30 | 1.32 | 0.25 | 0.0087 |

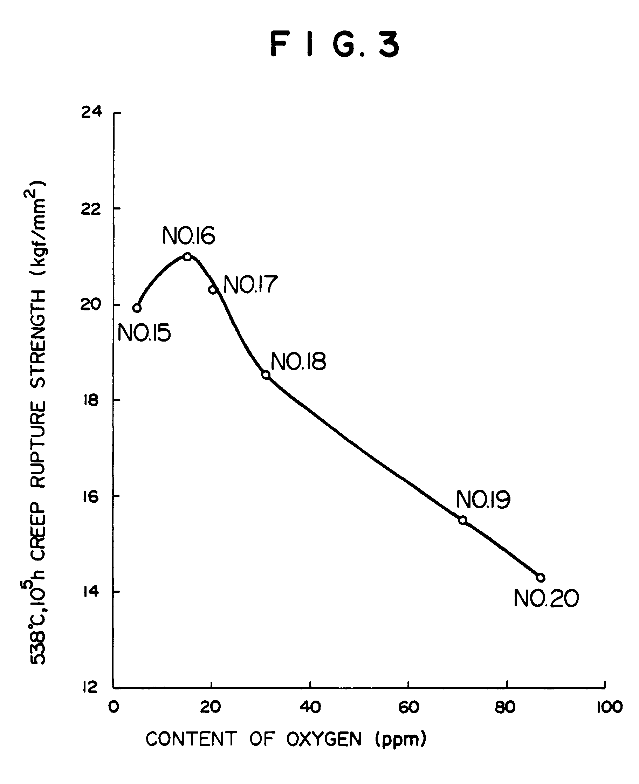

The specimens were quenched in such a manner that they were austenitized by being heated to 950°C and then by being cooled at a speed of 100°C/h. Next, they were annealed by being heated at 660°C for 40 hours. Table 4 shows 538°C creep rapture strength in the same manner as that shown in Table 2. Figure 3 is a graph showing a relationship between creep rupture strength and oxygen. It is found that a superior creep rupture strength not less than about 12 kgf/mm$^2$ can be obtained by making $O_2$ to a level not more than 100 ppm, further, a superior creep rupture strength not less than 15 kgf/mm$^2$ can be obtained by making O$_2$ level thereof be not more than 80 ppm, and furthermore, a superior creep rupture strength not less than 18 kgf/mm$^2$ can be obtained by making O$_2$ level thereof be not more than 40 ppm.

Table 4

| Specimen No. | $\frac{Mn}{Ni}$ | $\frac{Si+Mn}{Ni}$ | $\frac{V+Mo}{Ni+Cr}$ | Creep rupture strength (kgf/mm$^2$) |
|---|---|---|---|---|
| 15 | 0.047 | 0.076 | 0.55 | 19.9 |
| 16 | 0.063 | 0.088 | 0.57 | 21.0 |
| 17 | 0.056 | 0.087 | 0.56 | 20.3 |
| 18 | 0.073 | 0.103 | 0.57 | 18.5 |
| 19 | 0.065 | 0.089 | 0.51 | 15.6 |
| 20 | 0.052 | 0.087 | 0.52 | 14.3 |

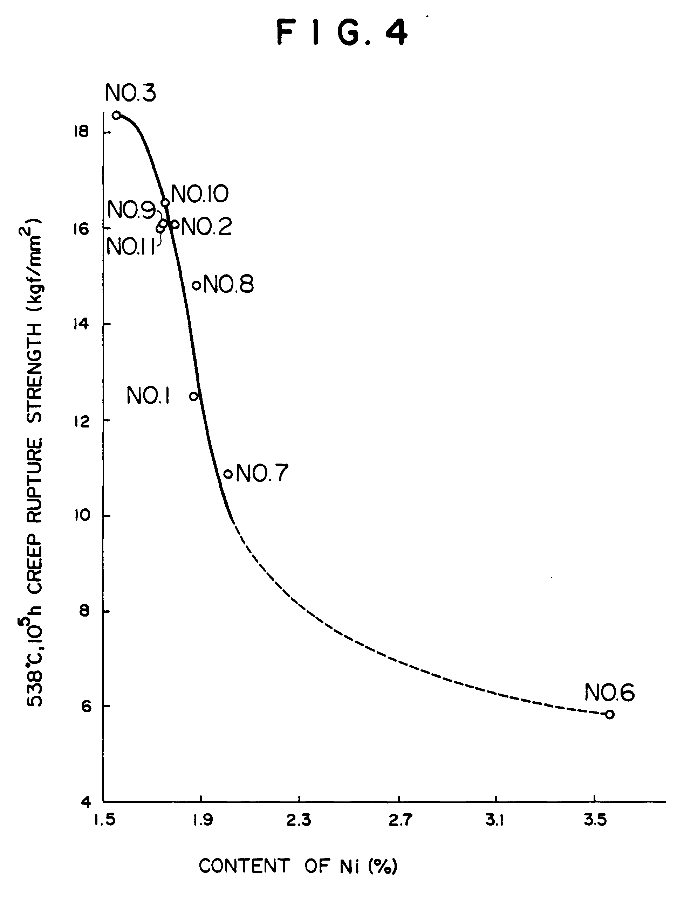

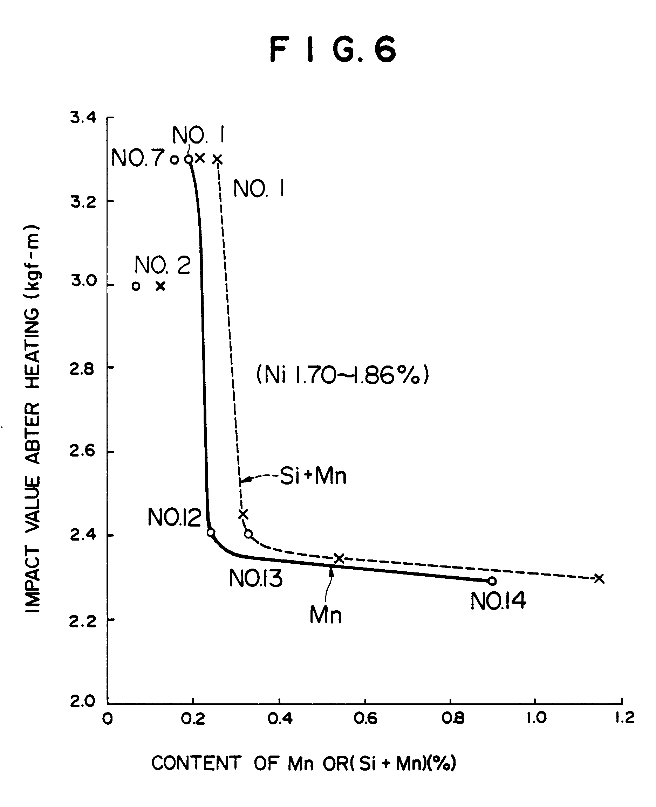

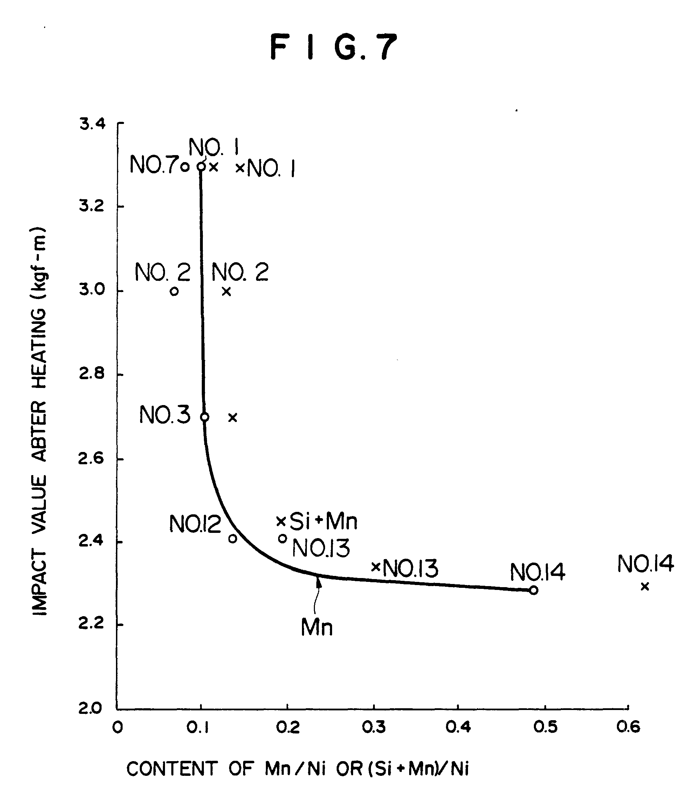

Figure 4 is a graph showing a relationship between 538°C, 10$^5$ hour creep rupture strength and an amount of Ni. As shown in Figure 4, the creep rupture strength is abruptly lowered as an amount of Ni is increased. In particular, a creep rupture strength not less than about 11 kgf/mm$^2$ is exhibited when an amount of Ni is not more than about 2%, and in particular, a creep rupture strength not less than about 12 kgf/mm$^2$ is exhibited when an amount of Ni is not more than 1.9%.

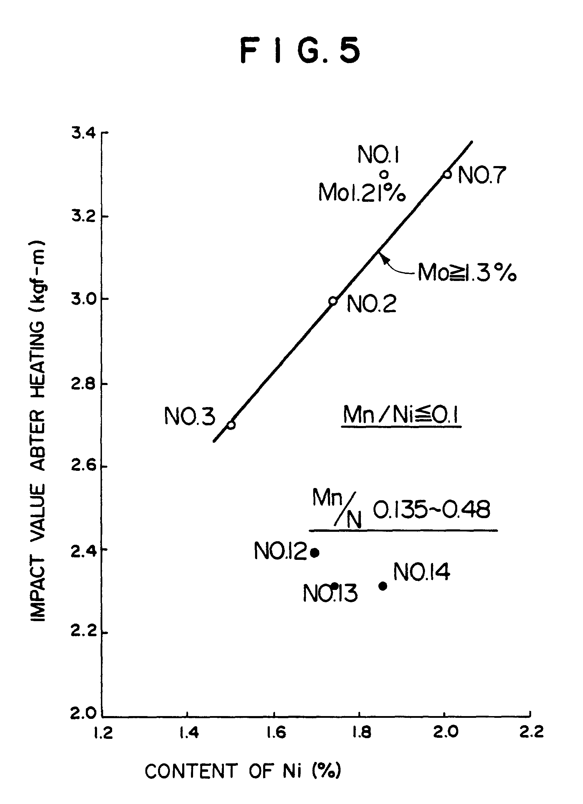

Figure 5 is a graph showing a relationship between an impact value and an amount of Ni after the specimens have been heated at 500°C for 3,000 hours. As shown in Figure 5, the specimens of the present invention in which a ratio (Si + Mn)/Ni is not more than 0.18 or in which another ratio Mn/Ni is not more than 0.1 can bring about high impact value by the increase in an amount of Ni, but the comparative specimens Nos. 12 to 14 in which a ratio (Si + Mn)/Ni exceeds 0.18 or in which another ratio Mn/Ni exceeds 0.12 have a low impact value not more than 2.4 kgf-m, and thus an increase in the amount of Ni is little concerned with the impact value.
Likewise, Figure 6 is a graph showing a relationship between impact value after being subjected to heating embrittlement and an amount of Mn or an amount of Si + Mn of the specimens containing 1.6 to 1.9% of Ni. As shown in Figure 6, it is apparent that Mn or (Si + Mn) greatly influences the impact value at a particular amount of Ni. That is, the specimens have a very high impact value when an amount of Mn is not more than 0.2% or an amount of Si + Mn is not more than 0.25%.
Likewise, Figure 7 is a graph showing a relationship between an impact value and a ratio Mn/Ni or a ratio (Si + Mn)/Ni of the specimens containing 1.52 to 2.0% Ni. As shown in Figure 7, a high impact value not less than 2.5kgf-m is exhibited when a ratio Mn/Ni is not more than 0.12 or a ratio Si + Mn/Ni is not more than 0.18.

## EXAMPLE 2

Table 5 shows typical chemical compositions (wt%) of specimens used in an experiment.
The specimens were obtained in such a manner that they were melted in a high frequency melting furnace, made to an ingot, and hot forged to a size of 30 mm square at a temperature from 850 to 1250°C. The specimens Nos. 21 and 22 were prepared for the comparison with the invented materials. The specimens Nos. 23 to 32 are rotor materials superior in toughness according to the present invention.
The specimens Nos. 23 to 32 were quenched in such a manner that they were austenitized being heated to 950°C in accordance with a simulation of the conditions of the center of a rotor shaft integrating high and low pressure portions of a steam turbine, and then cooled at a speed of 100°C/h. Next, they were annealed by being heated at 650°C for 50 hours and cooled in a furnace. Cr-Mo-V steel according to the present invention included no ferrite phase and was made to have a bainite structure as a whole.
An austenitizing temperature of the invented steels must be 900 to 1000°C. When the temperature was less than 900°C, creep rupture strength was lowered, although superior toughness can be obtained. When the temperature exceeded 1000°C, toughness was lowered, although superior creep rapture strength was obtained. An annealing temperature must be 630 to 700°C. If the temperature is less than 630°C superior toughness cannot be obtained, and when it exceeds 700°C, superior creep strength cannot be obtained.
Table 6 shows the results of a tensile strength test, impact test, and creep rupture test. Toughness is shown by Charpy impact absorbing energy of a V-shaped notch tested at 20°C and 50% fracture transition temperature (FATT).
The creep rupture test by a notch was effected using specimens each having a notch bottom radius of 66 mm, a notch outside diameter of 9 mm, and a V-shaped notch configuration of 45° (a radius of a notch bottom end) "r" is 0.16 mm).

Table 5

| Speci-men No. | Composition (wt%) | | | | | | | | | | | | (ppm) O₂ | $\frac{V+Mo}{Ni+Cr}$ | $\frac{Mn}{Ni}$ |
|---|---|---|---|---|---|---|---|---|---|---|---|---|---|---|---|
| | C | Si | Mn | P | S | Ni | Cr | Mo | W | V | Nb | Others | | | |
| 21 | 0.26 | 0.27 | 0.77 | 0.007 | 0.010 | 0.34 | 1.06 | 1.28 | – | 0.27 | – | – | 26 | 1.107 | 2.26 |
| 22 | 0.23 | 0.05 | 0.30 | 0.009 | 0.012 | 3.56 | 1.66 | 0.40 | – | 0.12 | – | – | 20 | 0.100 | 0.084 |
| 23 | 0.25 | 0.02 | 0.15 | 0.003 | 0.004 | 1.64 | 1.95 | 1.40 | – | 0.27 | – | – | 19 | 0.465 | 0.092 |
| 24 | 0.24 | 0.02 | 0.16 | 0.001 | 0.006 | 1.70 | 1.51 | 1.68 | – | 0.27 | 0.03 | – | 10 | 0.607 | 0.094 |
| 25 | 0.23 | 0.03 | 0.15 | 0.002 | 0.005 | 1.65 | 1.60 | 1.61 | 0.21 | 0.25 | – | – | 19 | 0.572 | 0.091 |
| 26 | 0.24 | 0.02 | 0.15 | 0.001 | 0.007 | 1.69 | 1.52 | 1.60 | 0.23 | 0.25 | 0.03 | – | 20 | 0.576 | 0.089 |
| 27 | 0.22 | 0.04 | 0.16 | 0.009 | 0.009 | 1.63 | 1.65 | 1.60 | 0.26 | 0.26 | – | Ti 0.03 B 0.004 | 21 | 0.567 | 0.098 |
| 28 | 0.24 | 0.06 | 0.15 | 0.005 | 0.007 | 1.65 | 1.57 | 1.68 | – | 0.23 | 0.05 | Ca 0.006 | 18 | 0.593 | 0.091 |
| 29 | 0.26 | 0.03 | 0.15 | 0.008 | 0.011 | 1.58 | 1.49 | 1.70 | – | 0.25 | 0.04 | La 0.08 Ce 0.09 | 16 | 0.633 | 0.094 |
| 30 | 0.23 | 0.05 | 0.14 | 0.006 | 0.008 | 1.71 | 1.51 | 1.65 | 0.27 | 0.25 | – | Al 0.006 | 16 | 0.590 | 0.082 |
| 31 | 0.26 | 0.08 | 0.13 | 0.007 | 0.006 | 1.80 | 1.50 | 1.73 | – | 0.24 | – | Ta 0.06 | 17 | 0.597 | 0.072 |
| 32 | 0.25 | 0.04 | 0.13 | 0.009 | 0.009 | 1.46 | 1.61 | 1.63 | 0.14 | 0.25 | – | Zr 0.31 | 15 | 0.612 | 0.089 |

Table 6

| Specimen No. | Tensile strength (kg/mm$^2$) | Elongation (%) | Contraction of area (%) | Impact absorbing energy (kg-m) | 50% FATT (°C) | 538°C Creep rupture strength (kgf/mm$^2$) |
|---|---|---|---|---|---|---|
| 21 | 88.1 | 20.1 | 60.8 | 1.3 | 120 | 14.0 |
| 22 | 72.4 | 25.2 | 75.2 | 12.0 | −20 | 6.5 |
| 23 | 88.9 | 21.4 | 70.7 | 8.7 | 35 | 17.5 |
| 24 | 89.0 | 21.9 | 71.3 | 9.5 | 28 | 18.9 |
| 25 | 88.1 | 23.1 | 73.0 | 5.8 | 39 | 19.2 |
| 26 | 88.3 | 21.8 | 72.3 | 7.2 | 34 | 18.3 |
| 27 | 89.5 | 21.5 | 71.4 | 10.6 | 5 | 19.1 |
| 28 | 88.2 | 22.2 | 72.5 | 11.7 | −2 | 18.8 |
| 29 | 88.5 | 22.7 | 72.8 | 13.7 | −9 | 19.2 |
| 30 | 91.8 | 20.0 | 70.2 | 10.7 | 3 | 18.4 |
| 31 | 91.3 | 20.1 | 70.2 | 11.8 | −3 | 19.3 |
| 32 | 90.8 | 20.6 | 70.6 | 10.8 | 0 | 18.5 |

Creep rupture strength is determined by a Larson Mirror method and shown by strength obtained when a specimen was heated at 538°C for $10^5$ hours. As apparent from Table 6, the invented materials have a tensile strength not less than 88 kg/mm$^2$ at a room temperature, an impact absorbing energy not less than 5 kg/mm$^2$, a 50% FATT not more than 40°C, and a creep rupture strength of 17 kg/mm$^2$, and thus they are very useful for a turbine rotor integrating high and low pressure portions.

These invented steels have greatly improved toughness as compared with that of the material (specimen No. 21) corresponding to a material currently used to a high pressure rotor (having a high impact absorbing energy and a low FATT). Further, they have a 538°C, $10^5$ hour notch creep rupture strength superior to that of the material (specimen No. 22) corresponding to a material currently used to a low pressure rotor.

In the relationship between a ratio of a sum of V and Mo as carbide creating elements to a sum of Ni and Cr as quenching ability improving elements, and creep rapture strength and impact absorbing energy, the creep rupture strength is increased as the component ratio (V + Mo)/(Ni + Cr) is increased until it becomes about 0.7. The impact absorbing energy is lowered as the component ratio is increased. The toughness (vE20 > 2.5 kg-m) and the creep rupture strength (R > 11 kg/mm$^2$) necessary as the turbine rotor integrating high and low pressure portions are obtained when (V + Mo)/(Ni + Cr) is made to be in the range of 0.45 to 0.7. Further, to examine brittle characteristics of the invented materials and the comparative material No. 21 (corresponding to a material currently used to a high pressure rotor) and the comparative material No. 22 (corresponding to a material currently used to a low pressure rotor), an impact test was effected to specimens before subjected to a brittle treatment at 500°C for 3000 h and those after subjected to the treatment and a 50% fracture transition temperature (FATT) was examined. As a result, an FATT of the comparative material No. 21 was increased (made brittle) from 119°C to 135°C (ΔFATT = 16°C), an FATT of the material, No. 2 was increased from -20°C to 18°C (ΔFATT = 38°C) by the brittle treatment, whereas it was also confirmed that an FATT of the invented materials were 39°C both before and after subjected to the brittle treatment and thus it was confirmed that they were not made brittle.

The specimens Nos. 27 to 32 of the invented materials added with rare earth elements (La - Ce), Ca, Zr, and Al, respectively, have toughness improved thereby. In particular, an addition of the rare earth elements is effective to improve the toughness. A material added with Y in addition to La - Ce was also examined and it was confirmed that Y was very effective to improve the toughness.

As a result of an examination of an influence of oxygen to creep rupture strength of the invented materials, it is found that a superior strength not less than about 12 kg/mm$^2$ can be obtained by making $O_2$ to be in a level not more than 100 ppm, further, a superior strength not less than 15 kg/mm$^2$ can be obtained at a level thereof not more than 800 ppm, and, furthermore, a superior strength not less than 18 kg/mm$^2$ can be obtained at a level thereof not more than 400 ppm.

As a result of an examination of the relationship between 538°C, $10^5$ hour creep rupture strength and an amount of Ni, it is found that the creep rupture strength is abruptly lowered as an amount of Ni is increased. In particular, a strength not less than about 11 kg/mm$^2$ is exhibited when an amount of Ni is not more than about 2%, and in particular, a strength not less than about 12 kg/mm$^2$ is exhibited when an amount of Ni is not more than 1.9%.

Further, as a result of an examination of a relationship between impact value and an amount of Ni after the specimens have been heated at 500°C for 3000 hours, the specimens according to the present invention in which the ratio (Si + Mn)/Ni is not more than 0.18 bring about high impact values by the increase in an amount of Ni, but the comparative specimens in which the ratio (Si + Mn)/Ni exceeds 0.18 have a low impact value not more than 2.4 kg/mm$^2$, and thus an increase in the amount of Ni is little concerned with the impacts value.

As a result of an examination of a relationship between impact value and an amount of Mn or an amount of Si + Mn of the specimens containing 1.6 to 1.9% of Ni, it is found that Mn or Si + Mn greatly influences the impact value at a particular amount of Ni, and the specimens have a very high impact value when an amount of Mn is not more than 0.2% or an amount of Si + Mn is in a range from 0.07 to 0.25%.

As a result of an examination of a relationship between impact value and a ratio Mn/Ni or a ratio (Si + Mn)/Ni of the specimens containing 1.52 to 2.0% of Ni, a high impact value not less than 2.5 kg/mm$^2$ is exhibited when the ratio Mn/Ni is not more than 0.12 or the ratio (Si + Mn)/Ni is in a range from 0.04 to 0.18.

EXAMPLE 3

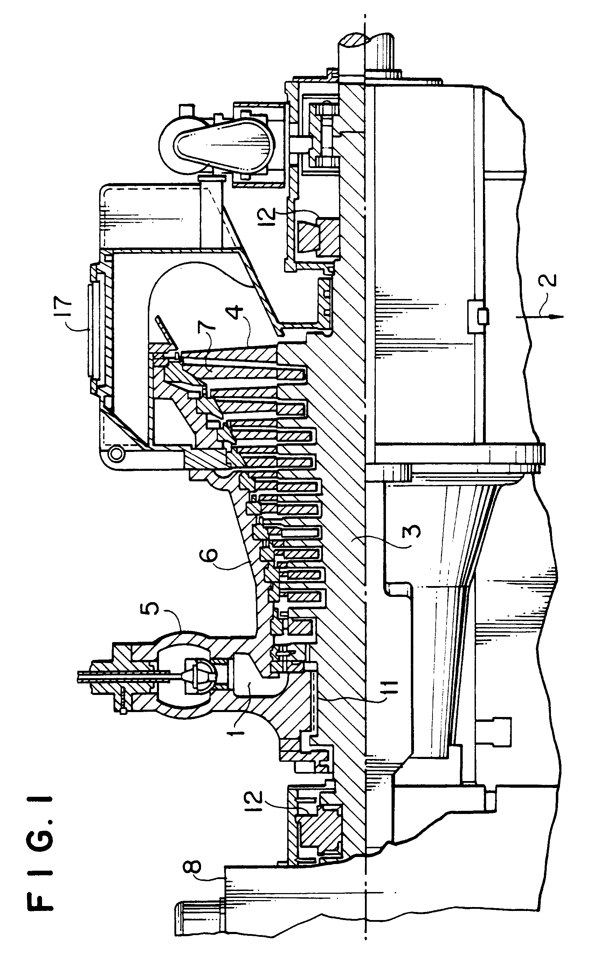

Figure 1 shows a partial cross sectional view of a steam turbine integrating high and low pressure portions according to the present invention. A conventional steam turbine consumes high pressure and temperature steam of 80 at and 480°C at the main steam inlet thereof and low temperature and pressure steam of 722 mmHg and 33°C at the exhaust portion thereof by a single rotor thereof, whereas the steam turbine integrating high and low pressure portions of the invention can increase an output of a single turbine by increasing a pressure and temperature of steam at the main steam inlet thereof to 100 at and 536°C, respectively. To increase an output of the single turbine, it is necessary to increase a blade length of movable blades at a final stage and to increase a flow rate of steam. For example, when a blade length of the movable blade at a final stage is increased from 26 inches to 33.5 (850.9 mm) inches, an ring-shaped band area is increased by about 1.7 times. Consequently, a conventional output of 100 MW is increased to 170 MW, and further when a blade length is increase to 40 inches, an output per a single turbine can be increased by 2 times or more.

When a Cr-Mo-V steel containing 0.5% of Ni is used for a rotor integrating high and low pressure portions as a material of the rotor shaft having blades of a length not less than 33.5 (850.9 mm) inches, this rotor material can sufficiently withstand an increase in a steam pressure and temperature at the main stream inlet thereof, because this steel is superior in high temperature strength and creep characteristics to be thereby used at a high temperature region. In the case of a long blade of 26 (660.4 mm) inches, however, tangential stress in a low temperature region, in particular, tangential stress occurring at the center hole of the turbine rotor at a final stage movable blade portion is about 0.95 in a stress ratio (operating stress/allowable stress) when the rotor is rotated at a rated speed, and in the case of a long blade of 33.5 (850.9 mm) inches, the tangential stress is about 1.1 in the stress ratio, so that the above steel is intolerable to this application.

On the other hand, when 3.5% Ni-Cr-Mo-V steel is used as a rotor material, the above stress ratio thereof is about 0.96 even when long blades of 33.5 (850.9 mm) inches are used, because this material has toughness in the low temperature region, and tensile strength and yield strength which are 14% higher than those of the Cr-Mo-V steel. However, if long blades of 40 (1016 mm) inches are used, the above stress ratio is 1.07, and thus this rotor material is intolerable to this application. Since this material has creep rupture stress in the high temperature region which is about 0.3 times that of the CR-Mo-V steel and thus it is intolerable to this application due to lack of high temperature strength.

To increase an output as described above, it is necessary to provide a rotor material which simultaneously has both superior characteristics of the Cr-Mo-V steel in a high temperature region and superior characteristics of the Ni-Cr-Mo-V steel in a low temperature region.

When a long blade of a class from 30 to 40 inches is used, a material having a tensile strength not less than 88 kgf/mm$^2$ is necessary, because conventional Ni-Cr-Mo-V steel (ASTM A470 Class 7) has the stress ratio of 1.07, as described above.

Further, a material of a steam turbine rotor integrating high and low pressure portions on, which long blades not less than 30 inches are attached must have a 538°C, 10$^5$ h creep rupture strength not less than 15 kg/mm$^2$ from a view point of securing safety against high temperature breakdown on a high pressure side, and an impact absorbing energy not less than 2.5 kg-m/cm$^2$ (3 kg-m/cm$^2$) from a view point of securing safety against breakdown due to brittleness on a low pressure side.

From the above view point, in the invention there was obtained heat resisting steels which can satisfy the above requirements and which increase an output per a single turbine.

The steam turbine according to the present invention includes thirteen stages of blades 4 planted on a rotor shaft 3 integrating high and low pressure portions, and steam having a high temperature and pressure of 538°C and 88 at, respectively, is supplied from a steam inlet 1 through a steam control valve 5. The steam flows in one direction from the inlet 1 with the temperature and pressure thereof being decreased to 33°C and 722 mm Hg, respectively and then discharged from an outlet 2 through final stage blades 4. Since the rotor shaft 3 integrating high and low pressure portions according to the present invention is exposed to a steam temperature ranging from 538°C to 33°C, forged steel composed of Ni-Cr-Mo-V low alloy steel having the characteristics describedin the example 1 is used. The portions of the rotor shaft 3 where the blades 4 are planted are formed to a disk shape by integrally machining the rotor shaft 3. The shorter the blade is, the longer the disk portion, whereby the vibration thereof is reduced.

The rotor shaft 3 according to the present invention was manufactured in such a manner that cast ingot having the alloy compositions of the specimen No. 16 shown in the example 1 and the specimen No. 24 shown in the example 2, respectively was electro-slug remelted, forged to a shaft having a diameter of 1.2 m, heated at 950°C for 10 hours, and then the shaft was cooled at a cooling speed of 100°C/h by spraying water while the it is rotated. Next, the shaft was annealed by being heated at 665°C for 40 hours. A test piece cut from the center of the rotor shaft was subjected to a creep test, an impact test of a V-shaped notch (a cross sectional area of the specimen: 0.8 cm$^2$) before the specimen was heated and after it had been heated (after it had been heated at 500°C for 300 hours), and a tensile strength test, and values substantially similar to those of the examples 1 and 2 were obtained.

Each portion of the present examples are fabricated from a material having the following composition.

(1) Blade

Blades composed of three stages on a high temperature and pressure side have a length of about 40 mm in an axial direction and are fabricated from forged martensitic steel consisting, by weight, of 0.20 to 0.30% C, 10 - 13% Cr, 0.5 to 1.5% Mo, 0.5 to 1.5% W, 0.1 to 0.3% V, not more than 0.5% Si, not more than 1% Mn, and the balance Fe and incidental impurities.

Blades at an intermediate portion, of which length is gradually made longer as they approach a low pressure side, are fabricated from forged martensitic steel consisting, by weight, of 0.05 to 0.15% C, not more than 1% Mn, not more than 0.5% Si, 10 to 13% Cr, not more than 0.5% Mo, not more than 0.5% Ni, and the balance Fe and incidental impurities.

Blades having a length of 33.5 inches (850 mm) at a final stage, ninety pieces of which were planted around one circumference of a rotor were fabricated from forged martensitic steel consisting, by weight, of 0.08 to 0.15% C, not more than 1% Mn, not more than 0.5% Si, 10 to 13% Cr, 1.5 to 3.5% Ni, 1 to 2% Mo, 0.2 to 0.5% V, 0.02 to 0.08% N, and the balance Fe and incidental impurities. An erosion-preventing shield plate fabricated from a stellite plate was welded to the leading edge of the final stage at the terminal end thereof. Further, a partial quenching treatment was effected regarding portions other than the shield plate. Furthermore, a blade having a length not less than 40 inches (1016 mm) may be fabricated from Ti alloy containing 5 to 7% Al and 3 to 5% V.

Each of 4 to 5 pieces of these blades in the respective stages was fixed to a shroud plate through tenons provided at the extreme end thereof and caulked to the shroud plate made of the same material as the blades.

The 12% Cr steel shown above was used to provide a blade which was rotated at 3000 rpm even in a case of its length of 40 inches (1016 mm). Although Ti alloy was used when a blade having a length of 40 inches (1016 mm) was rotated at 3600 rpm, the 12% Cr steel was used to provide a blade having a length up to 33.5 inches (850 mm) and being rotated at 3600 rpm.

(2) Stationary blades 7 provided in the first to third stages at the high pressure side were fabricated from martensitic steel having the same composition as those of the corresponding movable blades and stationary blades other than those of the first to third stages were fabricated from martensitic steel having the same composition as those of the movable blades at the intermediate portion.

(3) A casing 6 was fabricated from Cr-Mo-V cast steel comprising by weight 0.15 to 0.3% C, not more than 0.5% Si, not more than 1% Mn, 1 to 2% Cr, 0.5 to 1.5% Mo, 0.05 to 0.2% V, and not more than 0.1% Ti.

Designated at 8 is a generator capable of generating an output of 100,000 to 200,000 KW. In the present examples, a distance between bearings 12 of the rotor shaft was about 520 cm, an outside diameter of a final blade was 316 cm, and a ratio of the distance between bearings to the outside diameter was 1.65. The generator had a generating capacity of 100,000 KW. A distance between the bearings was 0.52 m per 10,000 KW.

Further, in the present examples, when a blade of 40 inches (1016 mm) was used at a final stage, an outside diameter thereof was 365 cm, and thus a ratio of a distance between bearings to this outside diameter was 1.43, whereby an output of 200,000 KW was generated with a distance between the bearings being 0.26 m per 10,000 KW.

In these cases, a ratio of an outside diameter of a portion of the rotor shaft where the blades were planted to a lengt of the final stage blade is 1.70 for a blade of 33.5 inches (850 mm) and 1.71 for a blade of 40 inches (1016 mm).

In the present examples, steam having a temperature of 566°C was applicable, and pressures thereof of 121, 169, or 224 at were also applicable.

EXAMPLE 4

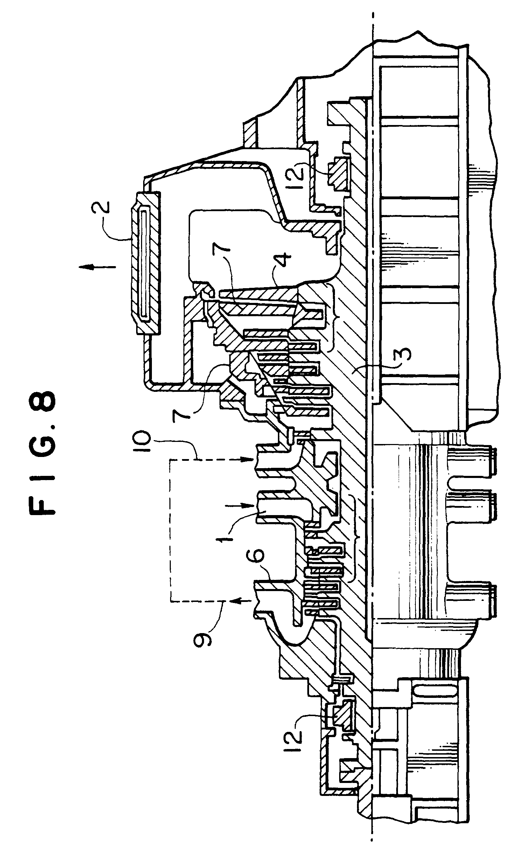

Figure 8 is a partially taken-away sectional view of an arrangement of a reheating type steam turbine integrating high and low pressure portions. In this steam turbine, steam of 538°C and 126 at was supplied from an inlet 1 and discharged from an outlet 9 through a high pressure portion of a rotor 3 as steam of 367°C and 38 at, and further steam having been heated to 538°C and to a pressure of 35 at was supplied from an inlet 10, flowed to a low pressure portion of the rotor through an intermediate pressure portion thereof, and discharged from an outlet 2 as steam having a temperature of about 46°C and a pressure of 0.1 at. A part of the steam discharged from the outlet 9 is used as a heat source for the other purpose and then again supplied to the turbine from the inlet 10 as a heat source therefor. If the rotor for the steam turbine integrating high and low pressure portions is fabricated from the material of the specimen No. 5 of the example 1, the vicinity of the steam inlet 1, i.e., a portion a will have sufficient high temperature strength, however, since the center of the rotor 3 will have a high ductility-brittle transition temperature of 80 to 120°C, there will be caused such drawback that, when the vicinity of the steam outlet 2, i.e., a portion b has a temperature of 50°C, the turbine is not sufficiently ensured with respect to safety against brittle fracture. On the other hand, if the rotor 3 is fabricated from the material of the specimen No. 6, safety against brittle fracture thereof at the vicinity of the steam outlet 2, i.e., the portion b will be sufficiently ensured, since a ductility-brittle transition temperature at the center of the rotor 3 is lower than a room temperature, however, since the vicinity of the steam inlet 1, i.e., the portion a will have insufficient high temperature strength and since the alloy constituting the rotor 3 contains a large amount of Ni, there will be such a drawback that the rotor 3 is apt to become brittle when it is used (operated) at a high temperature for a long time. More specifically, even if any one of the materials of the specimens Nos. 5 and 6 is used, the steam turbine rotor integrating high and low pressure portions made of the material composed of the specimens No. 5 or 6 has a certain disadvantage, and thus it cannot be practically used. Note that, in Figure 8, 4 designates a movable blade, 7 designates a stationary blade, and 6 designates a casing, respectively. A high pressure portion was composed of five stages and a low pressure portion was composed of six stages.

In this example, the rotor shaft 3, the movable blades 4, the stationary blades 7, and the casing 6 were formed of the same materials as those of the above-mentioned example 3. The movable blade at a final stage had a length not less than 33.5 (851 mm) inches and was able to generate an output of 120,000 KW. Similar to the example 3, 12% Cr steel or Ti alloy steel is used for this blade having length of not less than 33.5 inches (851 mm). A distance between bearings 12 was about 454 cm, a final stage blade of 33.5 inches (851 mm) in length had a diameter of 316 cm and a ratio of the distance between the bearings to this outside diameter was 1.72. When a final stage blade of 40 inches (1016) in length was used, an output of 200,000 KW was generated. The blade portion thereof had a diameter of 365 cm and a ratio of a distance between bearings to this diameter was 1.49. A distance between the bearings per a generated output of 10,000 KW in the former of 33.5 inches (851 mm) was 0.45 m and that in the latter of 40 (1016 mm) inches was 0.27 m. The above mentioned steam temperature and pressures were also applicable to this example.

EXAMPLE 5

The rotor shaft integrating high and low pressure portions according to the present invention was also able to be applied to a single flow type steam turbine in which a part of steam of an intermediate pressure portion of a rotor shaft was used as a heat source for a heater and the like. The materials used in the example 3 were used regarding the rotor shaft, movable blades, stationary blades and casing of this example.

EXAMPLE 6

The steam turbines described in the examples 3 to 5 were directly connected to a generator, and a gas turbine was directly connected the generator. A steam turbine of this example was applied to a combined generator system, wherein steam was generated by a waste-heat recovery boiler using exhaust combustion gas occurring in the gas turbine and the steam turbine was rotated by the steam. The gas turbine generated an output of about 40,000 KW and the steam turbine generated an output of about 60,000 KW, and thus this combined generator system generated a total output of 100,000 KW. Since the steam turbine of this example was made compact, it was manufactured at a cost lower than that of a conventional large stem turbine supposing that they have the same generating capacity and it has an advantage of being economically operated when an output to be generated fluctuates.

In the gas turbine, air compressed by a compressor was fed in a burner to produce a combustion gas having a high temperature not less than $1100°C$ and a disc on which blades were planted was rotated by the combustion gas. The disc was formed of three stages, wherein a movable blade was fabricated from Ni base cast alloy containing by weight 0.04 to 0.1% C, 12 to 16% Cr, 3 to 5% Al, 3 to 5% Ti, 2 to 5% Mo, and 2 to 5% Ni and a stationary blade was fabricated from Co base cast alloy containing by weight 0.25 to 0.45 C, 20 to 30% Cr, 2 to 5% at least one selected from the group consisting of Mo and W, and 0.1 to 0.5% at least one selected from the group consisting of Ti and Nb. A burner liner was fabricated from FE-Ni-Cr austenitic alloy containing by weight 0.05 to 0.15% C, 20 to 30% Cr, 30 to 45% Ni, 0.1 to 0.5% at least one selected from the group consisting of Ti and Nb, and 2 to 7% at least one selected from the group consisting of Mo and W. A heat shielding coating layer made of a $Y_2O_2$ stabilizing zirconia sprayed onto the outer surface of the liner was provided to the flame side of the liner. Between the Fe-Ni-Cr austenitic alloy and the zirconia layer was disposed a MCrAlY alloy layer consisting, by weight, of 2 to 5% Al, 20 to 30% Cr, 0.1 to 1% Y, and at least one selected from the group consisting of Fe, Ni and Co, that is, M is at least one selected from the group consisting of Fe, Ni and Co.

An Al-diffused coating layer was provided on the movable and stationary blades shown above.

A material of the turbine disc was fabricated from a martensitic forged steel containing by weight 0.15 to 0.25% C, not more than 0.5% Si, not more than 0.5% Mn, 1 to 2% Ni, 10 to 13% Cr, 0.02 to 0.1% at least one selected from the group consisting of Nb and Ta, 0.03 to 0.1% N, and 1.0 to 2.0% Mo; a turbine spacer, distant piece and compressor disc at a final stage being fabricated from the same martensitic steel, respectively.

EXAMPLE 7

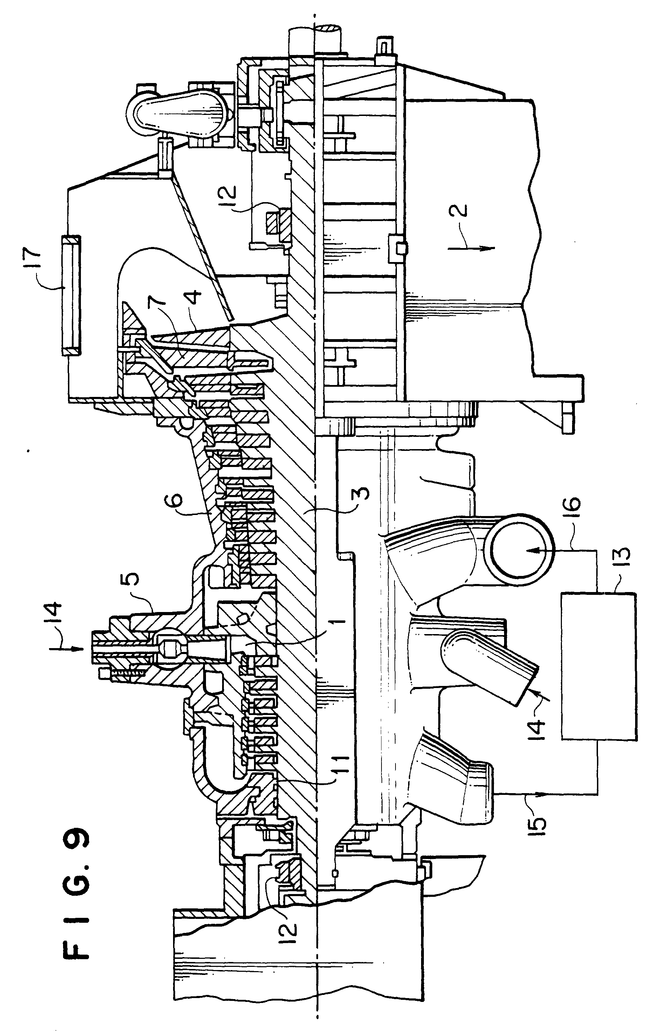

Figure 9 is a partially sectional view of a steam turbine integrating high and low pressure portions according to the present invention. A rotor shaft integrating high and low pressure portions 3 used in this example was fabricated from the Ni-Cr-MO-V steel having the banite structure as a whole described in the example 3. The left side is a high pressure side and the right side is a low pressure side in Figure 9, and a final stage blade had a length of 33.5 (851 mm) or 40 (1016 mm) inches. Blades on the left high pressure side were made of the same material as that described in the example 3 and final stage blades were made of the same material as that described in the Example 3. Steam of this example had a temperature of $538°C$ and a pressure of 102 kg/cm$^2$ at an inlet and had an temperature no more than $46°C$ and a pressure not more than an atmospheric pressure at an outlet, which steam was supplied to a condenser as shown by numeral 2. A material of the rotor shaft of this example had an FATT not more than 40°C, a V-shaped notch impact value at a room temperature not less than 4.8 kgf-mm$^2$ (a cross sectional area: not less than 0.8 cm$^2$), a tensile strength at a room temperature not less than 81 kgf/mm$^2$, a 0.2 yield strength not less than 63 kgf/mm$^2$, an elongation not less than 16%, a contraction of area not less than 45 percent, and a 538°C, 10$^5$ hour creep rupture strength not less than 11 kgf/mm$^2$. Steam was supplied from an inlet 14, discharged from an outlet 15 through high pressure side blades, again supplied to a reheater 13, and supplied to a low pressure side as high temperature steam of 538°C and 35 atg. Designated at 12 are bearings disposed at the opposite sides of the rotor shaft 3, and a distance between bearings was about 6 m. The rotor of this example rotated at 3600 rpm and generated an output of 120,000 KW. Blades 4 were composed of six stages on the high pressure side and ten stages on the low pressure side. In this example, a distance between bearings was 0.5 m per a generated output of 10,000 KW, and thus the distance was about 40% shorter than a conventional distance of 1.1 m.

Further, in this example, a final stage blade of 33.5 inches (851 mm) had a diameter of 316 cm and thus a ratio of a distance between the bearings to this outside diameter was 2.22 In another case, a final stage blade of 40 inches (1016 mm) having a diameter of 365 cm was used, a ratio of the distance between the bearings to the diameter being 1.92, which enables an output of 200,000 KW to be generated. As a result, a distance between the bearings per a generated output of 10,000 KW was 0.3 m in this another case, whereby the steam turbine was able to be made very compact.

**Claims**

1. Steam turbine having a rotor provided with an integrated rotor shaft (3), blades (4) fixed on the rotor shaft in a multistage order from the high pressure side to the low pressure side of the steam and a casing (6) covering said rotor, wherein

   - said rotor shaft (3) is fabricated from a Ni-Cr-Mo-V low alloy steel having a bainite structure, a 538 °C, 100 000 h creep rupture strength of not less than 11 kg/mm$^2$ and an impact value at room temperature of not less than 3,75 kg-m/cm$^2$,
   - the length of the blades (4) at least in the final stage is not less than 762 mm and
   - a temperature at the steam inlet of said steam turbine is not less than 530 °C and a temperature of the steam outlet therof is not more than 100 °C.

2. Steam turbine according to claim 1, **characterized in that** said Ni-Cr-Mo-V low alloy steel has a ratio (Mn/Ni) not more than 0.12 or a ratio (Si + Mn)/Ni not more than 0.18 by weight.

3. Steam turbine according to claim 1 or 2, **characterized in that** the rotor shaft (3) has an FATT of not more than 60 °C at the center thereof.

4. Steam turbine according to anyone of the claims 1 to 3, **characterized in that** the rotor shaft (3) has a V-shaped notch impact value not less than 3.0 kg/cm$^2$ after said rotor shaft has been heated at 500 °C for 3,000 hours.

5. Steam turbine according to anyone of the claims 1 to 4, **characterized in that** the ratio (L/D) of a length (L) between bearings (12) of said rotor shaft (3) to a diameter (D) between the terminal ends of said blades (4) disposed at the final stage is 1.4 to 2.3.

6. Steam turbine according to anyone of the claims 1 to 5, **characterized in that** the Ni-Cr-Mo-V alloy steel of the rotor shaft (3) contains by weight 0.15 to 0.4 % C, not more than 0.1 % Si, 0.05 to 0.25 % Mn, 1.5 to 2.5 % Ni, 0.8 to 2.5 % Cr, 0.8 to 2.5 % Mo, and 0.1 to 0.35 % V.

7. Steam turbine according to anyone of the claims 1 to 5, **characterized in that** the Ni-Cr-Mo-V low alloy steel of the rotor shaft (3) contains by weight 0.15 to 0.4 % C, not more than 0.1 % Si, 0.05 to 0.5 % Mn, 1.6 to 2.5 % Ni, 0.8 to 2.5 % Cr, 0.8 to 2.5 % Mo and 0.15 to 0.35 % V, in said steel a ratio (V + Mo)/(Ni + Cr) being 0.45 to 0.7.

8. Steam turbine according to anyone of claims 1 to 4, **characterized in that** said Ni-Cr-Mo-V low alloy steel of the rotor shaft (3) consists, by weight, of: 0.15 to 0.4 % C; not more than 0.1 % Si; 0.05 to 0.5 % Mn; 1.6 to 2.5 % Ni; 0.8 to 2.5 % Cr; 0.8 to 2.5 % Mo; 0.1 to 0.5 % V; at least one selected from the group consisting of 0.005 to 0.15 % Nb, 0.005 to 0.15 % Ta, 0.001 to 0.1 % Al, 0.001 to 0.1 % Zr, 0.001 to 0.1 % Ca, 0.001 to 0.1 % rare earth elements, 0.1 to 1.0 % W, 0.001 to 0.1 % Ti, and 0.001 to 0.1 % B; and the substantial balance Fe and incidental impurities, said steel having a ratio (V + Mo)/(Ni + Cr) of 0.45 to 0.7.

9.  Steam turbine according to anyone of claims 1 to 8, wherein said steam turbine is a non-reheating type and a single flow type in which steam flows in the turbine at a high temperature and high pressure side thereof and flows outwardly of the turbine at the low pressure side thereof.

10. Steam turbine according to claim 9, **characterized by** multi-stage blades (4) of not less than 10 stages from the initial stage to the final stage.

11. Steam turbine according to anyone of claims 1 to 8, wherein said steam turbine is a reheating type and comprises

    a high temperature and high pressure portion and
    a high temperature and intermediate-low pressure portion in which the state of steam changes from high temperature and intermediate pressure to high temperature and intermediate-low pressure, and the steam flowing out of the high temperature and high pressure turbine portion is reheated into a high temperature and intermediate pressure state and then is introduced into the high temperature and intermediate, low pressure turbine portion.

12. Steam turbine according to claim 10, **characterized in that** high temperature and high pressure portion comprises multi-stage blades (4) of not less than 5 stages, and the high temperature and intermediate-low pressure portion comprises multi-stage blades (4) of not less than 5 stages.

13. Steam turbine according to anyone of the preceding claims, **characterized in that** the rotor shaft (3) is capable to withstand at the high pressure side steam of a temperature of 538 °C or 566 °C being introduced onto the initial stage blades and to withstand at the low pressure side steam having a temperature of not more than 46 °C being discharged out of the final stage blades (4).

14. Steam turbine according to anyone of the preceding claims, **characterized in that** the final stage blades have a blade length of 851 to 1016 mm and that the blades from the initial stage to a stage of 85.1 cm blade length being made of martensitic steel containing 10 to 13 % Cr, blades of 101.6 cm length being made of Ti-base alloy.

15. A combined generator system having a single generator (8) simultaneously driven by both a steam turbine and a gas turbine, said steam turbine according to one of the claims 1 to 14 having a rotor (3) provided with an integrated rotor shaft, multi-stage blades (4) planted on the integrated rotor shaft from a high pressure side to a low pressure side of steam and a casing (6) covering said rotor (3), and being suited for a steam temperature at a steam inlet (1) toward the first stage blades (4) thereof of not less than 530 °C and a steam temperature at the steam outlet (2) of the final stage blades thereof of not more than 100 °C, said casing (6) being integrally arranged from the high pressure side of said blades (4) to the low pressure side thereof, a ratio (L/D) of a length (L) defined between bearings (12) of said rotor shaft to a diameter (D) measured between the terminal ends of said blades (4) disposed at the final stage thereof being 1.4 to 2.3.

16. Generator system having a generator simultaneously driven by a gas turbine and a steam turbine as claimed in anyone of claims 1 to 14.

17. A method of producing a rotor shaft of a steam turbine according to anyone of claims 1 to 14 comprising the steps of preparing a steel ingot by electro-remelting a steel ingot containing by weight 0.15 to 0.4 % C, not more than 0.1 % Si, 0.05 to 0.25 % Mn, 1.5 to 2.5 % Ni, 0.8 to 2.5 % Cr, 0.8 to 2.5 % Mo and 0.15 to 0.35 % V in which steel ingot the ratio (Mn/Ni) is not more than 0.12 and/or the ratio (Si + Mn)/Ni is not more than 0.18, hot-forging said steel ingot, quenching said steel ingot in such a manner that said steel ingot is heated to an austenitizing temperature of 900 to 1000 °C and cooled at a predetermined cooling speed of preferably 100 °C/h, and annealing said steel ingot at a temperature of 630 to 700 °C.

**Patentansprüche**

1.  Dampfturbine mit einem Rotor, der mit einer integrierten Rotorwelle (3), in einer mehrstufigen Anordnung von der Hochdruckseite zur Niedrigdruckseite an der Rotorwelle befestigten Schaufeln (4) und einem den Rotor abdeckenden Gehäuse (6) versehen ist, wobei

- die Rotorwelle (3) aus einem niedrig legierten Ni-Cr-Mo-V-Stahl hergestellt ist, der ein Bainitgefüge, eine 538 °C, 100.000 Stunden Zeitstandfestigkeit von nicht unter 11 kg/mm$^2$ und eine Kerbschlagzähigkeit bei Raumtemperatur von nicht unter 3,75 kg-m/cm$^2$ aufweist,
- die Länge der Schaufeln (4) zumindest in der letzen Stufe nicht geringer als 762 mm ist, und
- eine Temperatur am Dampfeinlass der Dampfturbine nicht geringer als 530 °C und eine Temperatur am Dampfauslass nicht höher als 100°C ist.

2. Dampfturbine nach Anspruch 1, **dadurch gekennzeichnet, dass** der niedrig legierte Ni-Cr-Mo-V-Stahl ein Gewichtsverhältnis von (Mn/Ni) von nicht über 0,12 oder ein Gewichtsverhältnis von (Si + Mn)/Ni von nicht über 0,18 aufweist.

3. Dampfturbine nach Anspruch 1 oder 2, **dadurch gekennzeichnet, dass** die Rotorwelle (3) an ihrer Mitte eine 60 °C nicht überschreitende FATT aufweist.

4. Dampfturbine nach einem der Ansprüche 1 bis 3, **dadurch gekennzeichnet, dass** die Rotorwelle (3) bei einer V-förmigen Kerbe eine Kerbschlagzähigkeit von nicht unter 3,0 kg/cm$^2$ aufweist, nachdem die Rotorwelle bei 500 °C für 3.000 Stunden geheizt worden ist.

5. Dampfturbine nach einem der Ansprüche 1 bis 4, **dadurch gekennzeichnet, dass** das Verhältnis (L/D) einer Länge (L) zwischen Lagern (12) der Rotorwelle (3) zu einem Durchmesser (D) zwischen den äußeren Enden der an der letzten Stufe angeordneten Schaufeln (4) 1,4 bis 2,3 beträgt.

6. Dampfturbine nach einem der Ansprüche 1 bis 5, **dadurch gekennzeichnet, dass** der legierte Ni-Cr-Mo-V-Stahl der Rotorwelle (3), in Gewichtsprozent, 0,15 bis 0,4 % C, nicht über 0,1 % Si, 0,05 bis 0,25 % Mn, 1,5 bis 2,5 % Ni, 0,8 bis 2,5 % Cr, 0,8 bis 2,5 % Mo und 0,1 bis 0,35 % V enthält.

7. Dampfturbine nach einem der Ansprüche 1 bis 5, **dadurch gekennzeichnet, dass** der niedrig legierte Ni-Cr-Mo-V-Stahl der Rotorwelle (3), in Gewichtsprozent, 0,15 bis 0,4 % C, nicht über 0,1 % Si, 0,05 bis 0,5 % Mn, 1,6 bis 2,5 % Ni, 0,8 bis 2,5 % Cr, 0,8 bis 2,5 % Mo und 0,15 bis 0,35 % V enthält, wobei in dem Stahl ein Verhältnis von (V + Mo)/(Ni + Cr) 0,45 bis 0,7 beträgt.

8. Dampfturbine nach einem der Ansprüche 1 bis 4, **dadurch gekennzeichnet, dass** der niedrig legierte Ni-Cr-Mo-V-Stahl der Rotorwelle (3), in Gewichtsprozent, aus 0,15 bis 0,4 % C, nicht mehr als 0,1 % Si, 0,05 bis 0,5 % Mn, 1,6 bis 2,5 % Ni, 0,8 bis 2,5 % Cr, 0,8 bis 2,5 % Mo, 0,1 bis 0,5 % V, mindestens einem Bestandteil, der aus der Gruppe, bestehend aus 0,005 bis 0,15 % Nb, 0,005 bis 0,15 % Ta, 0,001 bis 0,1 % Al, 0,001 bis 0,1 % Zr, 0,001 bis 0,1 % Ca, 0,001 bis 0,1 % Elemente der seltenen Erden, 0,1 bis 1,0 % W, 0,001 bis 0,1 % Ti und 0,001 bis 0,1 % B ausgewählt ist, und einem im wesentlichen aus Fe sowie zufälligen Verunreinigungen bestehenden Rest besteht, wobei der Stahl ein Verhältnis von (V + Mo)/(Ni + Cr) von 0,45 bis 0,7 aufweist.

9. Dampfturbine nach einem der Ansprüche 1 bis 8, wobei die Dampfturbine vom nicht nacherhitzenden Typ und vom einflutigen Typ ist, bei der Dampf auf deren Hochtemperatur- und Hochdruckseite in die Turbine strömt und auf deren Niedrigdruckseite aus der Turbine hinaus strömt.

10. Dampfturbine nach Anspruch 9, **gekennzeichnet durch** mehrstufige Schaufeln (4) aus nicht weniger als 10 Stufen von der ersten Stufe bis zur letzten Stufe.

11. Dampfturbine nach einem der Ansprüche 1 bis 8, wobei die Dampfturbine vom nicht nacherhitzenden Typ ist und umfasst

- einen Hochtemperatur- und Hochdruckabschnitt und
- einen Hochtemperatur- und Zwischen-Niedrigdruckabschnitt, in dem sich der Zustand des Dampfes von einer hohen Temperatur und einem mittleren Druck auf eine hohe Temperatur und einen mittleren-niedrigen Druck ändert, wobei der aus dem Hochtemperatur- und Hochdruckabschnitt der Turbine ausströmende Dampf auf einen Zustand hoher Temperatur und mittleren Drucks nacherhitzt wird und dann in den Hochtemperatur- und Zwischen-Niedrigdruckabschnitt der Turbine geleitet wird.

12. Dampfturbine nach Anspruch 10, **dadurch gekennzeichnet, dass** der Hochtemperatur- und Hochdruckabschnitt mehrstufige Schaufeln (4) aus nicht weniger als 5 Stufen umfasst, und der Hochtemperatur- und Zwischen-Niedrigdruckabschnitt mehrstufige Schaufeln (4) aus nicht weniger als 5 Stufen umfasst.

**13.** Dampfturbine nach einem der vorangehenden Ansprüche, **dadurch gekennzeichnet, dass** die Rotorwelle (3) dazu in der Lage ist, auf der Hochdruckseite Dampf mit einer Temperatur von 538 °C oder 566 °C standzuhalten, der auf die Schaufeln der ersten Stufe eingeleitet wird, und auf der Niedrigdruckseite Dampf mit einer Temperatur von nicht über 46 °C standzuhalten, der aus den Schaufeln (4) der letzen Stufe ausströmt.

**14.** Dampfturbine nach einem der vorangehenden Ansprüche, **dadurch gekennzeichnet, dass** die Schaufeln der letzten Stufe eine Schaufellänge von 851 bis 1016 mm aufweisen, und dass die Schaufeln von der ersten Stufe bis zu einer Stufe mit einer Schaufellänge von 85,1 cm aus einem martensitischen Stahl mit 10 bis 13 % Cr bestehen, und Schaufeln mit einer Länge von 101,6 cm aus einer Ti-Basis-Legierung bestehen.

**15.** Verbundenes Generatorsystem mit einem einzelnen Generator (8), der gleichzeitig sowohl von einer Dampfturbine als auch von einer Gasturbine angetrieben ist, wobei die Dampfturbine nach einem der Ansprüche 1 bis 14 einen Rotor (3) aufweist, der mit einer integrierten Rotorwelle, mehrstufigen, von der Hochdruckseite zu einer Niedrigdruckseite des Dampfes auf die integrierte Rotorwelle aufgesetzten Schaufeln (4) und einem den Rotor (3) abdeckenden Gehäuse (6) versehen ist, und für eine Dampftemperatur an einem Dampfeinlass (1) in Richtung ihrer Schaufeln der ersten Stufe (4) von nicht unter 530 °C und eine Dampftemperatur an dem Dampfauslass (2) ihrer Schaufeln der letzten Stufe von über 100 °C geeignet ist, wobei das Gehäuse integral von der Hochdruckseite der Schaufeln (4) zu deren Niedrigdruckseite angeordnet ist, und ein Verhältnis (L/D) einer zwischen Lagern (12) der Rotorwelle (3) festgelegten Länge (L) zu einem zwischen den äußeren Enden der an ihrer letzten Stufe angeordneten Schaufeln (4) gemessenen Durchmesser (D) 1,4 bis 2,3 beträgt.

**16.** Generatorsystem mit einem Generator, der gleichzeitig von einer Gasturbine und einer Dampfturbine nach einem der Ansprüche 1 bis 14 angetrieben ist.

**17.** Verfahren zur Herstellung einer Rotorwelle einer Dampfturbine nach einem der Ansprüche 1 bis 14 mit den Schritten

- Herstellen eines Stahlblocks durch Elektro-Umschmelzen eines Stahlblocks, der, in Gewichtsprozent, 0,15 bis 0,4 % C, nicht über 0,1 % Si, 0,05 bis 0,25 % Mn, 1,5 bis 2,5 % Ni, 0,8 bis 2,5 % Cr, 0,8 bis 2,5 % Mo und 0,15 bis 0,35 % V enthält, wobei in dem Stahlblock das Verhältnis von (Mn/Ni) nicht mehr als 0,12 und/oder das Verhältnis von (Si + Mn)/Ni nicht mehr als 0,18 beträgt,
- Warmumformen des Stahlblocks,
- Abschrecken des Stahlblocks in einer Weise, dass der Stahlblock auf eine Austenitisierungstemperatur von 900 bis 1000 °C aufgeheizt und mit einer vorbestimmten Abkühlgeschwindigkeit von vorzugsweise 100 °C/h abgekühlt wird, und
- Glühen des Stahlblocks bei einer Temperatur von 630 bis 700 °C.

## Revendications

**1.** Turbine à vapeur ayant un rotor muni d'un arbre de rotor intégré (3), des ailettes (4) fixées sur l'arbre de rotor dans un ordre à multiples étages à partir du côté haute-pression vers le côté basse-pression de la vapeur, et un carter (6) recouvrant ledit rotor, dans laquelle

- ledit arbre de rotor (3) est fabriqué à partir d'un acier faiblement allié Ni-Cr-Mo-V ayant une structure bainitique, une résistance à la rupture par fluage après 100 000 h à 538°C qui n'est pas plus petite que 11 kg/mm$^2$, et un indice de résilience à température ambiante qui n'est pas plus petit que 3,75 kg/mm$^2$,
- la longueur des ailettes (4), au moins à l'étage final, n'est pas inférieure à 762 mm, et la température à l'entrée de vapeur de ladite turbine à vapeur n'est pas inférieure à 530°C, et la température de sa sortie de vapeur n'est pas supérieure à 100°C.

**2.** Turbine à vapeur selon la revendication 1, **caractérisée en ce que** ledit acier faiblement allié Ni-Cr-Mo-V a un rapport (Mn/Ni) qui n'est pas supérieur à 0,12 en poids, ou un rapport (Si + Mn)/Ni qui n'est pas supérieur à 0,18 en poids.

**3.** Turbine à vapeur selon la revendication 1 ou 2, **caractérisée en ce que** l'arbre de rotor (3) a un FATT de pas plus de 60°C au niveau de son centre.

**4.** Turbine à vapeur selon l'une quelconque des revendications 1 à 3, **caractérisée en ce que** l'arbre de rotor (3) a un indice de résilience avec encoche en forme de V qui n'est pas inférieur à 3,0 kg/mm$^2$ après que ledit arbre de rotor ait été chauffé à 500°C pendant 3 000 heures.

**5.** Turbine à vapeur selon l'une quelconque des revendications 1 à 4, **caractérisée en ce que** le rapport (L/D) d'une longueur (L) définie entre des paliers (12) dudit arbre de rotor (3) sur un diamètre (D) mesuré entre les extrémités terminales desdites ailettes (4) disposées dans l'étage final est de 1,4 à 2,3.

**6.** Turbine à vapeur selon l'une quelconque des revendications 1 à 5, **caractérisée en ce que** l'acier allié Ni-Cr-Mo-V de l'arbre de rotor (3) contient en poids 0,15 à 0,4 % de C, pas plus de 0,1 % de Si, 0,05 à 0,25 % de Mn, 1,5 à 2,5 % de Ni, 0,8 à 2,5 % de Cr, 0,8 à 2,5 % de Mo, et 0,1 à 0,35 % de V.

**7.** Turbine à vapeur selon l'une quelconque des revendications 1 à 5, **caractérisée en ce que** l'alliage faiblement allié Ni-Cr-Mo-V de l'arbre de rotor (3) contient en poids 0,15 à 0,4 % de C, pas plus de 0,1 % de Si, 0,05 à 0,5 % de Mn, 1,6 à 2,5 % de Ni, 0,8 à 2,5 % de Cr, 0,8 à 2,5 % de Mo, et 0,15 à 0,35 % de V, le rapport (V + Mo)/(Ni + Cr) dans ledit acier étant de 0,45 à 0,7.

**8.** Turbine à vapeur selon l'une quelconque des revendications 1 à 4, **caractérisée en ce que** ledit alliage faiblement allié Ni-Cr-Mo-V de l'arbre de rotor (3) est constitué, en poids, de : 0,15 à 0,4 % de C, pas plus de 0,1 % de Si, 0,05 à 0,5 % de Mn, 1,6 à 2,5 % de Ni, 0,8 à 2,5 % de Cr, 0,8 à 2,5 % de Mo, 0,1 à 0,5 % de V, d'au moins un élément sélectionné parmi le groupe constitué de 0,005 à 0,15 % de Nb, 0,005 à 0,15 % de Ta, 0,001 à 0,1 % de Al, 0,001 à 0,1 % de Zr, 0,001 à 0,1 % de Ca, 0,001 à 0,1 % d'éléments des terres rares, 0,1 à 1,0 % de W, 0,001 à 0,1 % de Ti, et de 0,001 à 0,1 % de B, et la quantité restante étant constituée pratiquement de Fe et d'impuretés incidentelles, ledit acier ayant un rapport (V + Mo)/(Ni + Cr) de 0,45 à 0,7.

**9.** Turbine à vapeur selon l'une quelconque des revendications 1 à 8, dans laquelle ladite turbine est d'un type sans réchauffage, et d'un type à écoulement unique où un flux s'écoule dans la turbine sur son côté haute-température et haute-pression, et s'écoule vers l'extérieur de la turbine sur son côté basse-pression.

**10.** Turbine à vapeur selon la revendication 9, **caractérisée par** des ailettes de multiples étages (4) de pas moins de 10 étages à partir de l'étage initial jusqu'à l'étage final.

**11.** Turbine à vapeur selon l'une quelconque des revendications 1 à 8, dans laquelle ladite turbine est d'un type à réchauffage et comporte
une partie haute-température et haute-pression, et une partie haute-température et pression intermédiaire-basse, où l'état de la vapeur change à partir d'une haute-température et d'une pression intermédiaire vers une haute-température et une pression intermédiaire-basse, et où la vapeur s'écoulant hors de la partie de turbine haute-température et haute-pression est réchauffée jusqu'à un état de haute-température et de pression intermédiaire, et est ensuite introduite dans la partie de turbine haute-température et pression intermédiaire-basse.

**12.** Turbine à vapeur selon la revendication 10, **caractérisée en ce que** la partie haute-température et haute-pression comporte des ailettes de multiples étages (4) de pas moins de 5 étages, et la partie haute-température et pression intermédiaire-basse comporte des ailettes de multiples étages (4) de pas moins de 5 étages.

**13.** Turbine à vapeur selon l'une quelconque des revendications précédentes, **caractérisée en ce que** l'arbre de rotor (3) peut supporter, sur le côté haute-pression une vapeur ayant une température de 538°C ou 566°C introduite dans les ailettes d'étages initiaux, et de supporter sur le coté basse-pression une vapeur ayant une température de pas plus de 46°C évacuée hors des ailettes d'étage final (4).

**14.** Turbine à vapeur selon l'une quelconque des revendications précédentes, **caractérisée en ce que** les ailettes d'étage final ont une longueur d'ailette de 851 à 1016 mm, et **en ce que** les ailettes à partir de l'étage initial vers un étage de longueur d'ailette de 85,1 cm sont constituées d'acier martensitique contenant 10 à 13 % de Cr, des ailettes ayant une longueur de 101,6 cm étant fabriquées à partir d'un alliage à base de Ti.

**15.** Système formant génératrice mixte ayant une génératrice unique (8) entraînée simultanément à la fois par une turbine à vapeur et une turbine à gaz, ladite turbine à vapeur selon l'une quelconque des revendications 1 à 14 ayant un rotor (4) muni d'un arbre de rotor intégré, des ailettes de multiples étages (4) plantées sur l'arbre de rotor intégré à partir d'un côté haute-pression vers un côté basse-pression de vapeur, et un carter (6) recouvrant ledit rotor (3), et étant approprié pour une température de vapeur à une entrée de vapeur (1) vers ses ailettes de premier étage (4) qui n'est pas inférieure à 530°C, et pour une température de vapeur à la sortie de vapeur (2) de ses ailettes d'étage final qui n'est pas supérieure à 100°C, ledit carter (6) étant agencé en un seul bloc à partir du côté haute-pression desdites ailettes (4) vers le côté basse-pression de celles-ci, un rapport (L/D) d'une longueur (L) définie entre des paliers (12) dudit arbre de rotor sur un diamètre (D) mesuré entre les extrémités terminales desdites ailettes (4) disposées dans l'étage final de celui-ci étant de 1,4 à 2,3.

16. Système formant génératrice mixte ayant une génératrice entraînée simultanément par une turbine à gaz et une turbine à vapeur selon l'une quelconque des revendications 1 à 14.

17. Procédé de fabrication d'un arbre de rotor d'une turbine à vapeur selon l'une quelconque des revendications 1 à 14, comportant les étapes consistant à préparer un lingot d'acier par électro-refonte d'un lingot d'acier contenant en poids 0,15 à 0,4 % de C, pas plus de 0,1 % de Si, 0,05 à 0,25 % de Mn, 1,5 à 2,5 de Ni, 0,8 à 2,5 % de Cr, 0,8 à 2,5 % de Mo et 0,15 à 0,35 % de V, lingot d'acier dans lequel le rapport (Mn/Ni) n'est pas supérieur à 0,12 et/ou le rapport (Si + Mn)/Ni n'est pas supérieur à 0,18, forger à chaud ledit lingot d'acier, tremper ledit lingot d'acier d'une manière telle que ledit lingot d'acier est chauffé jusqu'à une température d'austénitisation de 900°C à 1000°C, et refroidi à une vitesse de refroidissement prédéterminée de préférence de 100°C/h, et recuire ledit lingot d'acier à une température de 630 à 700°C.

FIG.1

# F I G . 2

# F I G. 3

# F I G. 4

# F I G. 5

# F I G. 6

# F I G. 7

# F I G. 8

EP 0 384 181 B1

F I G. 9